# EUROPEAN PATENT SPECIFICATION

(11) **EP 2 706 258 B1**
(45) Date of publication and mention of the grant of the patent: **04.11.2015**
(21) Application number: 11864814.6
(22) Date of filing: 02.05.2011
(51) Int. Cl.: F16F 15/129, F16F 15/123

(54) **TORSIONAL OSCILLATION ATTENUATION DEVICE**
TORSIONSSCHWINGUNGS-DÄMPFUNGSVORRICHTUNG
DISPOSITIF D'ATTÉNUATION DE VIBRATION DE TORSION

(43) Date of publication of application: 12.03.2014
(73) Proprietor: Toyota Jidosha Kabushiki Kaisha, Toyota-shi, Aichi 471-8571 (JP)
(72) Inventor: SATO, Tomohiro, Toyota-shi Aichi 471-8571 (JP)
(74) Representative: TBK
(86) International application number: PCT/JP2011/002536
(87) International publication number: WO 2012/150617

(56) References cited:
- JP-A- 2000 352 442
- JP-A- 2005 009 534
- JP-U- 63 075 630
- US-A1- 2004 185 941

## Description

### {TECHNICAL FIELD}

The present invention relates to a torsional vibration attenuation apparatus, and more particularly to a torsional vibration attenuation apparatus which is to be mounted on a vehicle and has torsional properties including a positive side property obtained when a driven rotation member is twisted in a positive side with respect to a drive rotation member and a negative side property obtained when the driven rotation member is twisted in a negative side with respect to the drive rotation member, the positive side property being able to be differentiated from the negative side property.

### {BACKGROUND ART}

As one of the torsional vibration attenuation apparatuses of this type, there has so far been known a torsional vibration attenuation apparatus which comprises a drive source such as an internal combustion engine, an electric motor and the like and driven wheels drivably connected with the drive source so that the rotational torque can be transmitted from the drive source to the driven wheels. The conventional torsional vibration attenuation apparatus is adapted to absorb the torsional vibrations to be generated from the drive source to a drive transmission system having transmission gear sets.

In general, the torsional vibrations are apt to give rise to abnormal sounds generated at the idling time of a vehicle, and abnormal sounds generated at the acceleration and deceleration times of the vehicle, as well as a tip-in/tip-out action as described hereinafter. In order to absorb the torsional vibrations which cause the various kinds of abnormal sounds to be generated, it is required to appropriately set the torsional properties of the torsional vibration attenuation apparatus.

Here, the abnormal noises generated at the idling time of the vehicle are known to be constituted by what is called "clattering noises", one kind of abnormal noises emitted as being "clattering noises" caused by the collisions of the gear pairs with no load. Those idling noises are generally caused by extremely small torsional vibrations originated from the rotational fluctuation caused by the torque fluctuation of the internal combustion engine at the idling time of the vehicle immediately after the vehicle is changed in shift position to the neutral position.

Further, the abnormal noises generated at the acceleration and deceleration times of the vehicle are known to be constituted partly by what is called "chinking noises", one kind of abnormal noises caused by the collisions of the slipping gear pairs of the transmission gear sets. These collisions are caused by the relatively large torsional vibrations and the torsional resonance of the drive transmission system which are originated from the rotational fluctuation in response to the torque fluctuation of the internal combustion engine.

In addition, the abnormal noises generated at the acceleration and deceleration times of the vehicle are known as one kind of abnormal noises to be generated in the passenger room by the vibrations caused by the torsional resonance of the drive transmission system originated from the torque fluctuation of the internal combustion engine. The torsional resonance of the drive transmission system is usually caused at the normal travelling operation, and therefore results in generating muffled noises in the passenger room at the normal travelling operation.

The term "tip-in/tip-out action" previously mentioned indicates an action to have a vehicle body moved quickly back and forth, called a "jerking phenomenon" which is caused by the torsional vibrations of the drive transmission system when the acceleration pedal is quickly depressed or released at the low opening degree of an accelerator. The jerking phenomenon is concomitant with low frequency vibrations, which is generally well known in the art.

The jerking phenomenon is generated as a result of an excessive torque to intermittently be generated as a rebound action from each of the tires after the torque transmitted to the tire is inversely transmitted to the drive transmission system from the tire in the case that the drive transmission system has a low rigidity. The excessive torque intermittently generated is transformed into back-and-forth vibrations causing the vehicle body to transiently be enormously moved back and forth, which is also well known in general.

For the abnormal noises to be generated at the idling time of the vehicle, there is caused a problem in the torsional property of the torsional vibration attenuation apparatus at around a zero torque where it is desirable that the torsional rigidity in the torsional property of the torsional vibration attenuation apparatus be set at a low level. On the other hand, for the back-and-forth vibrations caused by the tip-in/tip-out action, it is required to make the torsional property of a clutch disc assembly have a rigidity level as high as possible.

On the other hand, the torsional properties of the conventional torsional vibration attenuation apparatus are the same in the positive area and the negative area. For the torsional vibration attenuation apparatus with the torsional rigidity in the negative side equivalent to the torsional rigidity in the positive side as previously mentioned, it is not desirable from the point of view in the vibration property at the deceleration time of the vehicle, so that the torsional rigidity in the negative side is required to be lowered than the torsional rigidity in the positive side.

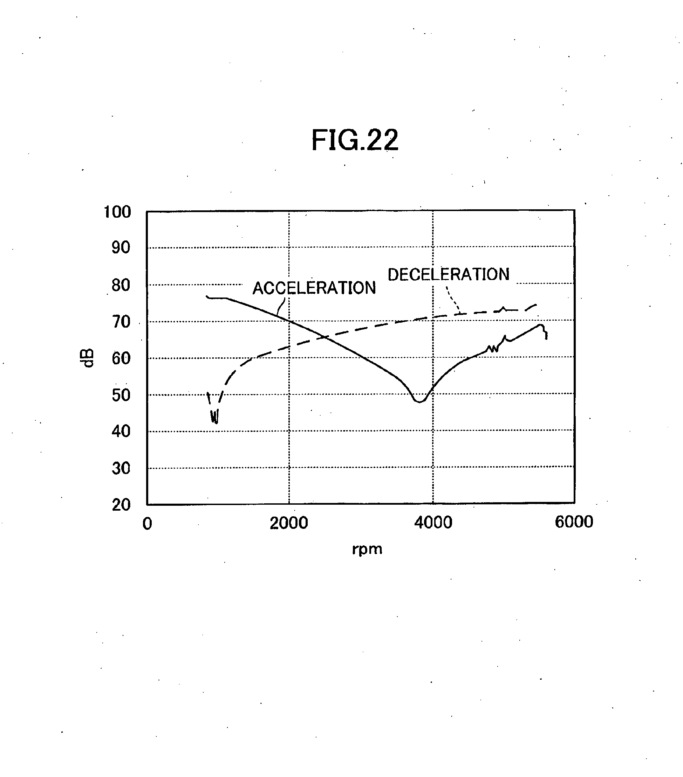

FIG. 22 is a view showing the rotational fluctuation of the internal combustion engine at the acceleration and deceleration times of the vehicle. It will be understood from FIG. 22 that the fluctuation of the internal combustion engine at the acceleration time of the vehicle is large in the low speed rotation area of the internal combustion engine, while the fluctuation of the internal combustion engine at the deceleration time of the vehicle is large in the high speed rotation area of the internal combustion engine.

For this reason, it is required that the torsional rigidity be increased at around the torsional resonance point at the acceleration time of the vehicle, thereby reducing the torsional resonance of the drive transmission system in the low rotation area, while the torsional rigidity be decreased in the high rotational area with the large rotation fluctuation of the internal combustion engine at the deceleration time of the vehicle, thereby increasing an attenuation force to absorb the torsional vibrations.

On the contrary, the conventional torsional vibration attenuation apparatus is constructed to have the same torsional properties set at the acceleration and deceleration times of the vehicle, so that if the torsional rigidity is increased, the torsional resonance of the drive transmission system can be attenuated in the low rotation area at the acceleration time of the vehicle, but possibly cannot sufficiently attenuate the torsional vibrations at the deceleration of the vehicle.

For this reason, it may be considered that the torsional rigidity is decreased to absorb torsional vibrations at the deceleration of the vehicle. In this case, the torsional vibrations are increased by the torsional resonance of the drive transmission system at around the resonance point at the acceleration time of the vehicle, thereby leading to generating muffled noises.

For this reason, it is required to enhance the vibration attenuation property at the deceleration time of the vehicle by reducing the torsional rigidity at the deceleration time of the vehicle to a level smaller than that of the torsional rigidity at the acceleration time of the vehicle.

As one of the conventional torsional vibration attenuation apparatuses of this kind is known an apparatus which is disclosed for example in the Patent Document 2.

The known torsional vibration attenuation apparatus comprises an input rotation member transmitted with a rotational torque transmitted from the internal combustion engine, a hub member drivably connected with an input shaft forming part of a transmission, a hub flange relatively rotatable with respect to the hub member in a predetermined angular range through a small spring, and first and second springs disposed to have the input rotation member drivably connected with the hub flange in a rotational direction and to have the rotational torque transmitted between the input rotation member and the hub member and the hub flange.

The hub member is attached with a sub-plate which is relatively rotatable with respect to the hub member. The sub-plate has a projection portion to be engageable with a positive side end portion in the rotational direction of the first spring. Between the sub-plate and the input rotation member intervenes a hysteresis mechanism which is held in friction contact with the input rotation member and the sub-plate.

The torsional vibration attenuation apparatus is constructed to have the hub flange and the hub member relatively rotated with respect to each other through the small spring resiliently deformed when the internal combustion engine is in the idling state of the vehicle after the shift position is changed to the neutral position. This leads to the torsional vibration attenuation apparatus having a first stage torsional property of low rigidity, thereby preventing the clattering noises from being generated at the idling time of the vehicle.

When, one the other hand, the small spring is compressed to its maximum level to have the hub member twisted in the positive side with respect to the input rotation member at the acceleration time of the vehicle, the first spring and the second spring are compressed in parallel (concurrently), thereby leading to the torsional vibration attenuation apparatus having a second stage torsional property.

When the hub flange and the hub member are relatively rotated with each other to have the small spring resiliently deformed at the deceleration time of the vehicle, the sub-plate is relatively rotated with respect to the hub flange, thereby having only the first spring compressed together with the small spring between the projection portion of the sub-plate and the hub flange.

When the small spring is further compressed to the maximum level, the sub-plate is rotated integrally with the hub member, thereby having the first spring and the second spring compressed in parallel between the input rotation member and the sub-plate, and thereby making it possible to obtain a torsional property having a negative side second stage lower in rigidity than the positive side second stage.

The positive side torsional action of the hub member with respect to the input rotation member makes the first spring and the second spring have respective parallel torsional rigidities, while the negative side torsional action of the hub member with respect to the input rotation member makes the first spring and the second spring have respective series torsional rigidities in this order.

For this reason, the torsional rigidity at the deceleration time of the vehicle is made smaller than the torsional rigidity at the acceleration time of the vehicle, thereby making it possible to enhance the torsional attenuation property at the deceleration time of the vehicle.

The document US 2004/0185941 A1 is considered to be the closest prior art and discloses all the features of the preamble of claim 1.

### {CITATION LIST}

### {PATENT LITERATURE}

Patent Document 1: Japanese Patent Application Publication No. 2006-144861
Patent Document 2: Japanese Patent Application Publication No. 2006-226534

### {SUMMARY OF INVENTION}

### {TECHNICAL PROBLEM}

The previously mentioned torsional vibration attenuation apparatus is adapted to resiliently deform the first spring and the small spring in parallel in the second torsional property at the deceleration time of the vehicle, thereby making it possible to have the small spring attenuate the extremely small torsional vibrations originated from the rotational fluctuation caused by the torque fluctuation of the internal combustion engine while having the first spring attenuate the large torsional vibrations.

When the vehicle is required to be stopped after the shift position is changed to the neutral position at the deceleration time of the vehicle, the hub flange and the sub-plate are urged by the first spring to be returned to the initial position (neutral position), thereby securing the gap between the sub-plate and the hub member to allow the small spring to be compressed and elongated at the idling time of the vehicle.

On the contrary, there is a possibility that the sub-plate cannot be returned to its initial position when the sub-plate cannot generate a torsional torque sufficient to overcome the hysteresis torque of the hysteresis mechanism, resulting from the fact that the hysteresis mechanism intervenes between the sub-plate and the input rotation member when the vehicle is stopped after the shift position is changed to the neutral position at the deceleration time of the vehicle.

When the sub-plate cannot be returned to its initial position as previously mentioned, the gap allowing the small spring to be sufficiently resiliently deformed cannot be secured between the sub-plate and the hub member, thereby making it impossible to sufficiently resiliently deform the small spring at the idling time of the vehicle, so that there is a possibility that the clattering noises cannot be sufficiently suppressed, thereby leading to lowering the attenuation property.

The present invention has been made for solving the previously mentioned problems encountered by the conventional torsional vibration attenuation apparatuses, and it is therefore an object of the present invention to provide a torsional vibration attenuation apparatus which can increase the torsion angle between the intermediate rotation member and the driven rotation member, thereby making it possible to sufficiently resiliently deform the third resilient member and to prevent the attenuation property from being lowered when the driven rotation member is returned to its neutral position from the state in which the driven rotation member is twisted in the negative side with respect to the drive rotation member.

### {SOLUTION TO PROBLEM}

To achieve the previously mentioned object of the present invention, the torsional vibration attenuation apparatus according to the present invention comprises a drive rotation member, a driven rotation member provided in coaxial relationship with the drive rotation member and relatively rotatable with respect to the drive rotation member, and a first resilient member and a second resilient member respectively having the drive rotation member and the driven rotation member relatively rotatably connected with each other, the first resilient member and the second resilient member being deformable in parallel when the driven rotation member is twisted in a positive side opposite to the rotational direction of the drive rotation member with respect to the drive rotation member, the first resilient member and the second resilient member being deformable in series in an order of the first resilient member and the second resilient member when the driven rotation member is twisted in a negative side the same in direction to the rotational direction of the drive rotation member with respect to the drive rotation member, an intermediate rotation member relatively rotatably provided on the driven rotation member in a predetermined torsion angular range, a third resilient member having a spring constant lower than the spring constant of each of the first resilient member and the second resilient member to have the intermediate rotation member and the driven rotation member relatively rotatably connected with each other, and an urging member provided on the drive rotation member, the intermediate rotation member being constructed to be relatively rotatable with respect to the driven rotation member in the states in which the first resilient member and the second resilient member are not resiliently deformed and in which the driven rotation member is twisted in the negative side, the urging member being adapted to urge the intermediate rotation member from the negative side to the positive side to have the torsion angle between the intermediate rotation member and the driven rotation member increased in the state in which the driven rotation member is twisted in the negative side.

The previously mentioned torsional vibration attenuation apparatus is constructed to have the driven rotation member and the intermediate rotation member relatively rotated with respect to each other in the state in which the driven rotation member is twisted in the negative side, so that the driven rotation member and the intermediate rotation member are relatively rotated with each other to make it possible to resiliently deform the third resilient member when the first resilient member and the second resilient member are resiliently deformed in series in the order of the first resilient member and the second resilient member.

For this reason, the extremely small torsional vibrations can be attenuated by the third resilient member while the large rotational fluctuation is being attenuated by the first resilient member and the second resilient member.

Further, the intermediate rotation member is urged toward the positive side from the negative side to have the torsion angle between the intermediate rotation member and the driven rotation member increased when the driven rotation member is in the state to be twisted in the negative side.

For this reason, the torsion angle between the intermediate rotation member and the driven rotation member can be increased, as well as the third resilient member can be sufficiently resiliently deformed in the state in which the first resilient member and the second resilient member are not resiliently deformed when the driven rotation member and the drive rotation member are returned to their neutral positions where the driven rotation member and the drive rotation member are not twisted with each other with no resilient deformation of the first resilient member and the second resilient member.

As a consequence, the extremely small torsional vibrations can be attenuated by the third resilient member, thereby making it possible to prevent the attenuation property from being lowered in the state in which the first resilient member and the second resilient member are not resiliently deformed.

In the torsional vibration attenuation apparatus as set forth in the above definition, the drive rotation member may preferably have a first accommodation portion for supporting the both end portions of the first resilient member and a second accommodation portion for supporting the both end portions of the second resilient member, the driven rotation member has a third accommodation portion and a fourth accommodation portion, the third accommodation portion accommodating the first resilient member in opposing relationship with the first accommodation portion and having predetermined gaps with the both end portions of the first resilient member in the rotational direction, and the fourth accommodation portion accommodating the second resilient member in opposing relationship with the second accommodation portion and having predetermined gaps with the both end portions of the second resilient member in the rotational direction, the distance between the positive side end portions of the first resilient member and the second resilient member and the positive side end portions of the third accommodation portion and the fourth accommodation portion facing the positive side end portions of the first resilient member and the second resilient member when the driven rotation member takes a neutral position where the driven rotation member is not twisted in the positive and negative sides with respect to the drive rotation member are substantially equal to each other, the distance between the negative side end portion of the second resilient member and the negative side end portion of the fourth accommodation portion facing the negative side end portion of the second resilient member being longer than the distance between the negative side end portion of the first resilient member and the negative side end portion of the third accommodation portion facing the negative side end portion of the first resilient member, and the intermediate rotation member having a flange portion connected with the driven rotation member through the third resilient member, and an arm portion radially outwardly projecting from the flange portion, the arm portion having an engagement portion facing the positive side end portion of the second resilient member to be engaged with and spaced apart from the positive side end portion of the fourth accommodation portion, and an opposing portion facing the negative side end portion of the first resilient member to form a predetermined gap with the negative side end portion of the first resilient member.

The previously mentioned torsional vibration attenuation apparatus is constructed to have the positive side end portions of the first resilient member and the second resilient member concurrently engaged with the positive side end portions of the third accommodation portion and the fourth accommodation portion, respectively, when the driven rotation member is twisted in the positive side with respect to the drive rotation member, resulting from the fact that the driven rotation member is constructed with the distances between the positive side end portions of the first resilient member and the second resilient member and the positive side end portions of the third accommodation portion and the fourth accommodation portion facing the positive side end portions of the first resilient member and the second resilient member being substantially equal to each other when the drive rotation member and the driven rotation member are positioned at their neutral positions.

For this reason, the first resilient member and the second resilient member are resiliently deformed in parallel in the positive side to have the rotational torque transmitted between the drive rotation member and the driven rotation member.

Further, the driven rotation member is constructed with the distance between the negative side end portion of the second resilient member and the negative side end portion of the fourth accommodation portion facing the negative side end portion of the second resilient member being longer than the distance between the negative side end portion of the first resilient member and the negative side end portion of the third accommodation portion facing the negative side end portion of the first resilient member, so that the negative side end portion of the fourth accommodation portion is engaged with the negative side end portion of the second resilient member after the negative side end portion of the third accommodation portion is engaged with the negative side end portion of the first resilient member to have the first resilient member deformed when the driven rotation member is twisted in the negative side with respect to the drive rotation member.

For this reason, the first resilient member and the second resilient member are resiliently deformed in series in the order of the first resilient member and the second resilient member to have the rotational torque transmitted between the drive rotation member and the driven rotation member, thereby making it possible to have the negative side torsional rigidity be made lower than the positive side torsional rigidity, and to improve the negative side attenuation property.

Further, the intermediate rotation member has an engagement portion facing the positive side end portion of the second resilient member to be engaged with and spaced apart from the positive side end portion of the fourth accommodation portion, and an opposing portion facing the negative side end portion of the first resilient member to form a predetermined gap with the negative side end portion of the first resilient member.

For this reason, the gap is formed between the negative side end portion of the first resilient member and the opposing portion can be formed when the driven rotation member is twisted in the negative side with respect to the drive rotation member to have the negative side end portion of the third accommodation portion engaged with the negative side end portion of the first resilient member.

Therefore, the opposing portion is engaged with and spaced apart from the negative side end portion of the second resilient member by the gap thus formed when the drive rotation member is inputted with the extremely small torsional vibrations, the driven rotation member and the intermediate rotation member are twisted with each other, thereby making it possible to have the third resilient member attenuate the extremely small torsional vibrations.

Further, the negative side end portion of the third accommodation portion is pressed by the negative side end portion of the first resilient member to return the intermediate rotation member to the positive side from the negative side when the driven rotation member is twisted to the neutral position from the state in which the driven rotation member is twisted in the negative side with respect to the drive rotation member.

At this time, the opposing surface of the intermediate rotation member and the negative side end portion of the third accommodation portion are positioned to be flush with each other, thereby making it impossible to return the intermediate rotation member to the positive side from the negative side, and thereby resulting in a possibility that the torsion angle between the intermediate rotation member and the driven rotation member cannot be sufficiently increased.

According to the present invention, the intermediate rotation member is urged to the positive side from the negative side to sufficiently increase the torsion angle between the intermediate rotation member and the driven rotation member when the driven rotation member is in the state in which the driven rotation member is twisted in the negative side.

For this reason, the engagement portion of the intermediate rotation member is sufficiently spaced apart from the fourth accommodation portion of the driven rotation member, thereby making it possible to sufficiently increase the torsion angle between the intermediate rotation member and the driven rotation member, and to sufficiently resiliently deform the third resilient member in the state in which the first resilient member and the second resilient member is not resiliently deformed, and to attenuate the extremely small torsional vibrations.

The urging member may preferably be adapted to urge the intermediate rotation member from the negative side to the positive side in the direction in which the engagement portion is spaced apart from the positive side end portion of the fourth accommodation portion to sufficiently increase the torsion angle between the intermediate rotation member and the driven rotation member when the engagement portion is twisted in the direction in which the engagement portion is spaced apart from the positive side end portion of the fourth accommodation portion.

The fact that the torsional vibration attenuation apparatus is constructed to have the urging member urge the intermediate rotation member from the negative side to the positive side in the direction in which the engagement portion is spaced apart from the positive side end portion of the fourth accommodation portion, and to have the engagement portion twisted in the direction in which the engagement portion is spaced apart from the positive side end portion of the fourth accommodation portion when the drive rotation member and the driven rotation member are returned to their neutral positions, results in the fact that the torsion angle between the driven rotation member and the intermediate rotation member can be sufficiently increased in the state in which the first resilient member and the second resilient member are not resiliently deformed.

For this reason, the third resilient member can be sufficiently deformed, thereby making it possible for the extremely small torsional vibrations to be attenuated by the third resilient member.

The third resilient member preferably may have a compression deformation amount increased as the engagement portion is moved from the state in which the engagement portion is spaced apart from the positive side end portion of the fourth accommodation portion to the state in which the engagement portion is engaged with the positive side end portion of the fourth accommodation portion.

The torsional vibration attenuation apparatus is constructed to have the compression deformation amount of the third resilient member decreased as the engagement portion is moved from the state in which the engagement portion is spaced apart from the positive side end portion of the fourth accommodation portion, so that the third resilient member can be more sufficiently resiliently be deformed when the gap between the engagement portion and the positive side end portion of the fourth accommodation portion is increased.

The torsional vibration attenuation apparatus may preferably further comprise a first hysteresis mechanism disposed between the drive rotation member and the intermediate rotation member to generate a hysteresis torque between the drive rotation member and the intermediate rotation member, and a second hysteresis mechanism disposed between the drive rotation member and the driven rotation member to generate a hysteresis torque between the drive rotation member and the driven rotation member, the hysteresis torque to be generated by the second hysteresis mechanism being smaller than the hysteresis torque to be generated by the first hysteresis mechanism, the hysteresis torque being generated between the drive rotation member and the driven rotation member by the second hysteresis mechanism when the driven rotation member is relatively rotated with respect to the intermediate rotation member.

The torsional vibration attenuation apparatus previously mentioned can decrease the hysteresis torque generated by the second hysteresis mechanism to a level lower than the hysteresis torque generated by the first hysteresis mechanism to have the hysteresis torque generated between the drive rotation member and the driven rotation member by the second hysteresis mechanism when the driven rotation member is relatively rotated with respect to the intermediate rotation member. This means that if the hysteresis torque of the second hysteresis mechanism is set to have a magnitude sufficiently large to allow the third resilient member to be resiliently deformed, the extremely small torsional vibrations can be attenuated by the third resilient member without fail.

Further, there is a possibility that the intermediate rotation member is not relatively rotated with respect to the driven rotation member by the hysteresis torque of the first hysteresis mechanism when the driven rotation member is twisted to the neutral position from the state in which the driven rotation member is twisted in the negative side with respect to the drive rotation member, resulting from the fact that the hysteresis torque of the first hysteresis mechanism is larger than the hysteresis torque of the second hysteresis mechanism.

The torsional vibration attenuation apparatus according to the present invention is constructed to increase the torsion angle between the intermediate rotation member and the driven rotation member when the driven rotation member is returned to the neutral position from the state in which the driven rotation member is twisted in the negative side with respect to the drive rotation member, resulting from the fact that the intermediate rotation member is urged from the negative side to the positive side to increase the torsion angle between the intermediate rotation member and the driven rotation member when the driven rotation member is in the state in which the driven rotation member is twisted in the negative side. This results in the fact that the torsion angle between the intermediate rotation member and the driven rotation member can be increased when the driven rotation member is returned to the neutral position from the state in which the driven rotation member is twisted in the negative side with respect to the drive rotation member, so that the third resilient member can be sufficiently resiliently deformed in the state in which the first resilient member and the second resilient member are not resiliently deformed.

The urging member may preferably be constituted by a return spring secured to the drive rotation member, the return spring being deformable to urge the intermediate rotation member from the negative side to the positive side when the driven rotation member is twisted in the negative side.

The torsional vibration attenuation apparatus according to the present invention is constructed to have an urging member constituted by a return spring, thereby making it possible to simplify the construction of the urging member, and therefore to suppress the production cost of the torsional vibration attenuation apparatus from being increased.

The torsional vibration attenuation apparatus preferably may be mounted on a vehicle to have the drive rotation member transmitted with a rotation torque from an internal combustion engine and to have the driven rotation member output the rotation torque to a drive transmission system, the driven rotation member being twisted in the positive side at the acceleration time of the vehicle, and the driven rotation member being twisted in negative side at the deceleration time of the vehicle.

The torsional vibration attenuation apparatus previously mentioned can resiliently deform the first resilient member and the second resilient member in parallel at the acceleration time of the vehicle, and can resiliently deform the first resilient member and the second resilient member in series in the order of the first resilient member and the second resilient member at the deceleration time of the vehicle, thereby making it possible to suppress the chinking noises and the tip-in/tip-out from being generated.

Further, the torsional rigidity at the deceleration time of the vehicle can be made smaller than the torsional rigidity at the acceleration time of the vehicle, thereby making it possible to enhance the attenuation property at the deceleration time of the vehicle.

Due to the fact that the extremely small torsional vibrations can be attenuated by the third resilient member when the first resilient member and the second resilient member are resiliently deformed in series in the order of the first resilient member and the second resilient member at the deceleration time of the vehicle, the extremely small torsional vibrations caused by the combustion fluctuation of the internal combustion engine can be attenuated by the third resilient member.

Further, the torsion angle between the intermediate rotation member and the driven rotation member can be sufficiently increased when the shift position is changed into the neutral state from the deceleration state to have the internal combustion engine held in the idling state, so that the third resilient member can be sufficiently deformed. This makes it possible to suppress the clattering noises at the idling time of the vehicle, and thereby to prevent the attenuation property from being lowered.

### {ADVANTAGEOUS EFFECT OF INVENTION}

The present invention can provide a torsional vibration attenuation apparatus which can increase the torsion angle between the intermediate rotation member and the driven rotation member, thereby making it possible to sufficiently resiliently deform the third resilient member and to prevent the attenuation property from being lowered when the driven rotation member is returned to its neutral position from the state in which the driven rotation member is twisted in the negative side with respect to the drive rotation member.

### {BRIEF DESCRIPTION OF DRAWINGS}

FIG. 1 is a view showing one preferred embodiment of a torsional vibration attenuation apparatus according to the present invention, and a front view of the torsional vibration attenuation apparatus.
FIG. 2 is a view showing the one preferred embodiment of the torsional vibration attenuation apparatus according to the present invention, and a cross-sectional view taken along the chain line and seen from the arrows A-A in FIG. 1.
FIG. 3 is a view showing the one preferred embodiment of the torsional vibration attenuation apparatus according to the present invention, and a front view of a hub plate forming part of the torsional vibration attenuation apparatus according to the present invention.
FIG. 4 is a view showing the one preferred embodiment of the torsional vibration attenuation apparatus according to the present invention, and a front view of a sub-plate forming part of the torsional vibration attenuation apparatus according to the present invention.
FIG. 5 is a view showing the one preferred embodiment of the torsional vibration attenuation apparatus according to the present invention, and a rear view of the hub plate and the sub-plate of the torsional vibration attenuation apparatus according to the present invention.
FIG. 6 is a view showing the one preferred embodiment of the torsional vibration attenuation apparatus according to the present invention, and a front view of the hub plate and the sub-plate in the state in which the sub-plate is twisted toward one side with respect to the hub plate.
FIG. 7 is a view showing the one preferred embodiment of the torsional vibration attenuation apparatus according to the present invention, and a front view of the hub plate and the sub-plate in the state in which the sub-plate is twisted toward the other side with respect to the hub plate.
FIG. 8 is a view showing the one preferred embodiment of the torsional vibration attenuation apparatus according to the present invention, and a front view of one of the disc plates forming part of the torsional vibration attenuation apparatus according to the present invention.
FIG. 9 is a view showing the one preferred embodiment of the torsional vibration attenuation apparatus according to the present invention, and a front view of the hub plate showing the sub-plate and a thrust plate forming part of the torsional vibration attenuation apparatus according to the present invention.
FIG. 10 is a view showing the one preferred embodiment of the torsional vibration attenuation apparatus according to the present invention, and a perspective view of the hub plate and the sub-plate showing a state in which the sub-plate and the thrust plate are twisted toward one side with respect to the hub plate.
FIG. 11 is a view showing the one preferred embodiment of the torsional vibration attenuation apparatus according to the present invention, and a perspective view of the hub plate and the sub-plate showing a state in which the sub-plate and the thrust plate are twisted toward the other side with respect to the hub plate.
FIG. 12 is a view showing the one preferred embodiment of the torsional vibration attenuation apparatus according to the present invention, and an enlarged view of an essential part of the torsional vibration attenuation apparatus according to the present invention.
FIG. 13 is a view showing the one preferred embodiment of the torsional vibration attenuation apparatus according to the present invention, and a view showing a state in which the sub-plate is urged from the negative side to the positive side by a return spring when the hub plate is twisted in the negative side, and a cross-sectional view taken along and seen from the line B-B in FIG. 12.
FIG. 14 is a view showing the one preferred embodiment of the torsional vibration attenuation apparatus according to the present invention, and a view showing a state in which the sub-plate is urged from the negative side to the positive side by the return spring when the hub plate is returned from the negative side to a neutral position, and a cross-sectional view taken along and seen from the line B-B in FIG. 12.
FIG. 15 is a view showing the one preferred embodiment of the torsional vibration attenuation apparatus according to the present invention, and a view showing a state in which the hub plate is twisted in the positive side.
FIG. 16 is a view showing the one preferred embodiment of the torsional vibration attenuation apparatus according to the present invention, and a view showing a state in which the hub plate is twisted in the negative side.
FIG. 17 is a view showing the one preferred embodiment of the torsional vibration attenuation apparatus according to the present invention, and a view showing a state in which the hub plate is twisted in the negative side from the state shown in FIG. 16.
FIG. 18 is a view showing the one preferred embodiment of the torsional vibration attenuation apparatus according to the present invention, and a view showing a state in which the hub plate is returned from the negative side to the neutral position.
FIG. 19 is a view showing the one preferred embodiment of the torsional vibration attenuation apparatus according to the present invention, and a view showing a torsional property of the torsional vibration attenuation apparatus according to the present invention.
FIG. 20 is a view showing the one preferred embodiment of the torsional vibration attenuation apparatus according to the present invention, and a view of one of the disc plates having an urging member constructed with other elements.
FIG. 21 is a view showing the one preferred embodiment of the torsional vibration attenuation apparatus according to the present invention, and a cross-sectional view taken along the chain line and seen from the arrows C-C in FIG. 20.
FIG. 22 is a view showing the relationship between the rotational fluctuation of the internal combustion engine and the rotational speed of the internal combustion engine.

### {DESCRIPTION OF EMBODIMENTS}

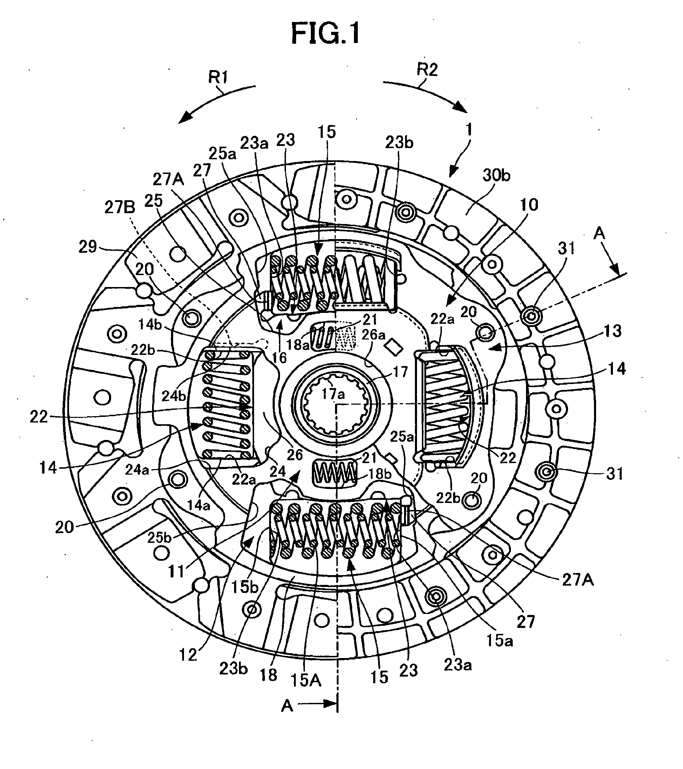

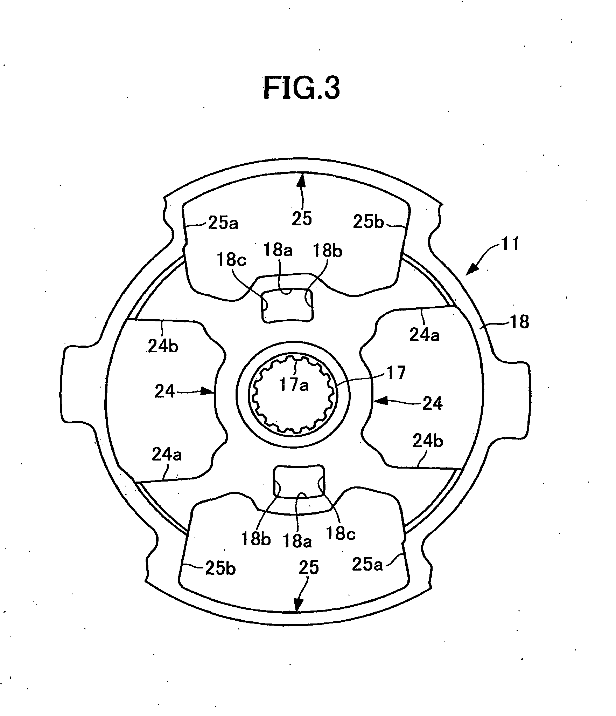

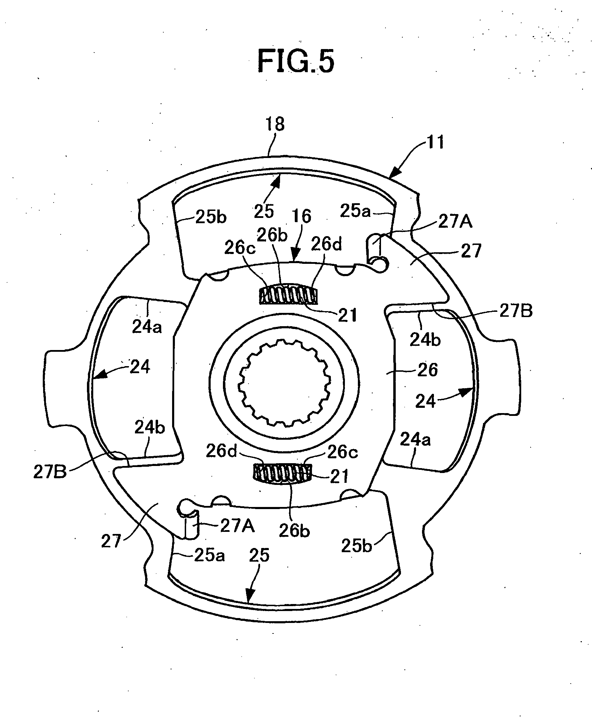

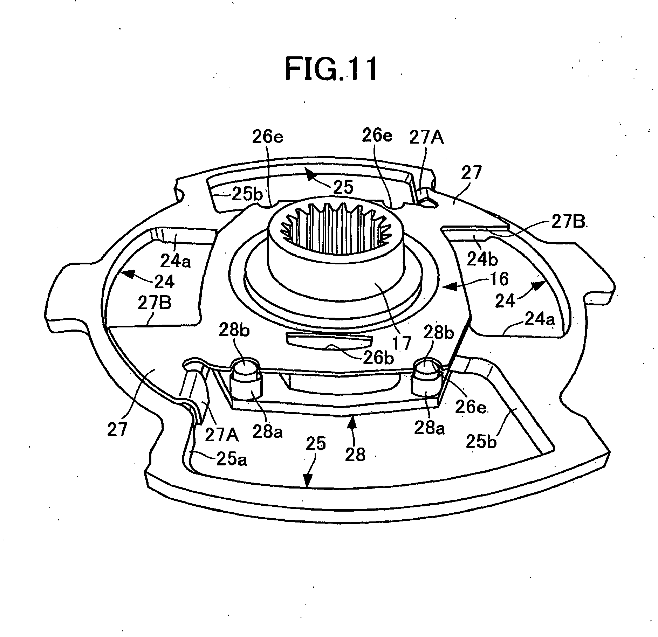

The preferred embodiments of the torsional vibration attenuation apparatus according to the present invention will hereinafter be described with reference to the accompanying drawings. FIGS. 1 to 21 are views showing one preferred embodiment of the torsional vibration attenuation apparatus according to the present invention. Explanation will hereinafter be made raising an example in which the torsional vibration attenuation apparatus is applied to a clutch apparatus.

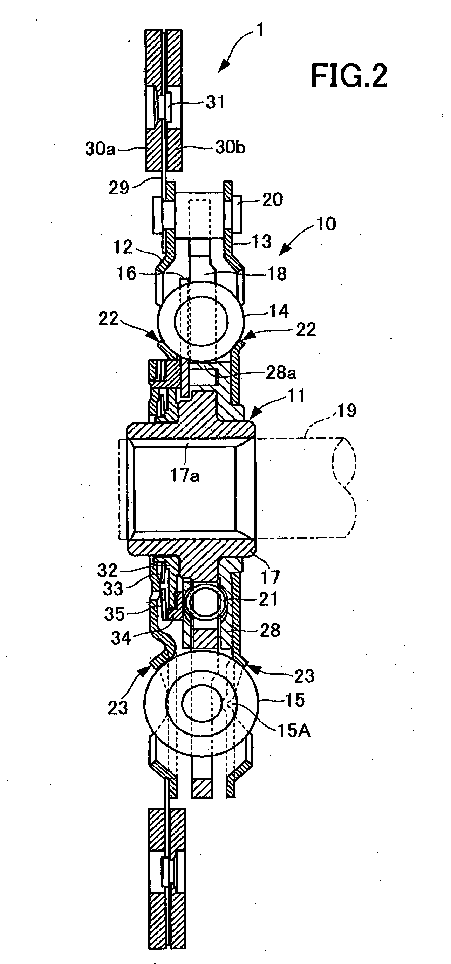

First, the construction of the torsional vibration attenuation apparatus according to the present embodiment will be explained hereinafter. As shown in FIGS. 1, 2, the clutch apparatus 1 is provided with a torsional vibration attenuation apparatus 10 which comprises a hub plate 11, and a pair of disc plates 12, 13. The hub plate 11 and the disc plates 12, 13 respectively constitute a driven rotation member and a drive rotation member as defined in the present invention. The disc plates 12, 13 are provided in coaxial relationship with the hub plate 11 to be relatively rotatable with respect to the hub plate 11. The torsional vibration attenuation apparatus 10 further comprises coil springs 14, coil springs 15, and a sub-plate 16 provided to be relatively rotatable with respect to the hub plate 11. Each of the coil springs 14 and the coil springs 15 functions to have the hub plate 11 and the disc plates 12, 13 resiliently connected with each other in the rotational direction thereof. The coil springs 14 and the coil springs 15 constitute first resilient members and second resilient members, respectively, as defined in the present invention.

As shown in FIGS. 1 to 3, the hub plate 11 has a boss member 17, and a hub flange 18 radially outwardly projecting from the boss member 17. The boss member 17 has an inner peripheral portion formed with a spline 17a held in spline connection with a spline formed on an input shaft 19 forming part of a transmission. The transmission constitutes part of a drive transmission system not shown in the drawings.

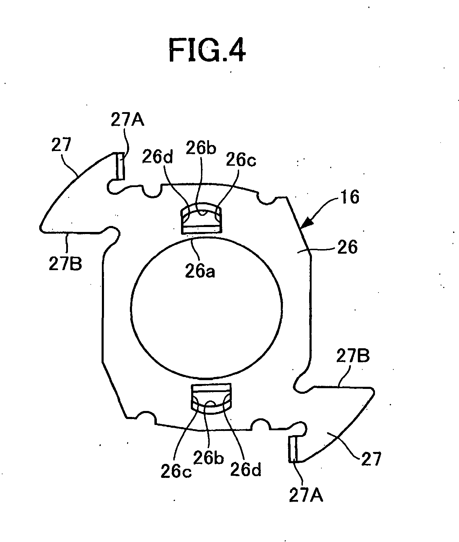

As shown in FIG. 4, the sub-plate 16 is integrally formed with a flange portion 26 and a pair of arm portions 27 radially outwardly projecting from the flange portion 26. The flange portion 26 has an inner peripheral portion formed with an opening 26a which allows the outer peripheral portion of the boss member 17 to pass therethrough, so that the sub-plate 16 and the boss member 17 are relatively rotatable with each other.

The disc plates 12, 13 are disposed at the both axial sides of the hub plate 11 and the sub-plate 16. The disc plates 12, 13 are secured to each other at their radially outer peripheral portions through rivets 20.

The sub-plate 16 is formed with opened windows 26b as shown in FIGS. 1, 4, 5, while the hub flange 18 is formed with opened windows 18a each of which is the same in shape as each of the opened windows 26b of the sub-plate 16 as shown in FIGS. 1, 3, 6, 7. The opened windows 26b and the opened windows 18a have small springs 21 accommodated therein. The small springs 21 respectively constitute third resilient members as defined in the present invention.

The small springs 21 allow the hub plate 11 and the sub-plate 16 to be relatively rotatably connected, and is therefore adapted to be deformed in response to the relative rotation of the hub plate 11 and the sub-plate 16. Each of the small springs 21 has a spring constant smaller than the spring constant of each of the coil springs 14, 15.

More specifically, each of the small springs 21 is accommodated in each of the opened windows 26b with the both ends of the small spring 21 being engaged with one end 26c and the other end 26d in the rotational direction of each of the opened windows 26b of the sub-plate 16 and is accommodated in each of the opened windows 18a with the both ends of the small spring 21 being engaged with one end 18b and the other end 18c in the rotational direction of each of the opened windows 18a of the hub flange 18.

In response to the relative rotation of the sub-plate 16 with respect to the hub flange 18, the one end 26c of the opened window 26b and the other end 18c of the opened window 18a are moved toward and away from each other, so that the small springs 21 are resiliently deformed to have the rotational torque transmitted between the sub-plate 16 and the hub flange 18.

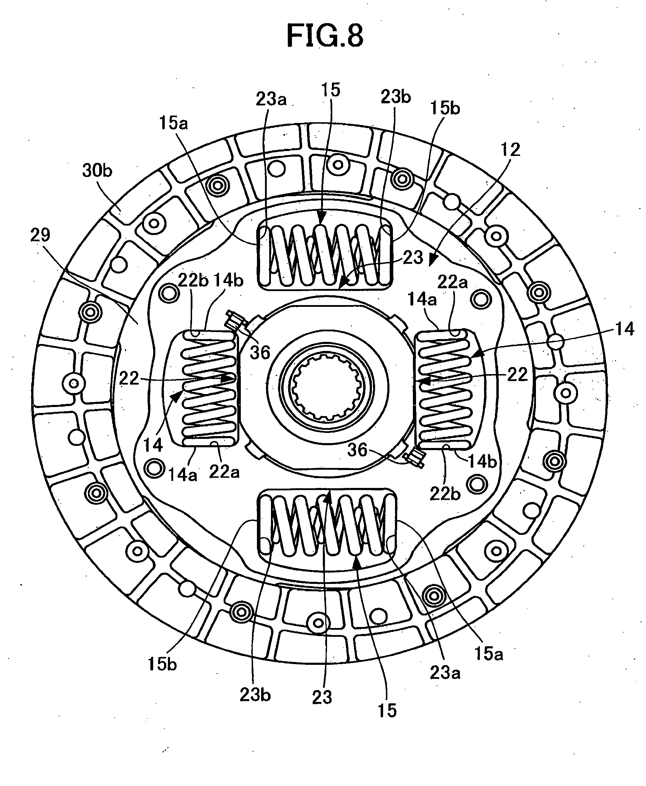

As shown in FIGS. 1, 2, 8, the disc plates 12, 13 are formed with spring accommodation windows 22 and spring accommodation windows 23 which respectively constitute first accommodation portions and second accommodation portions as defined in the present invention (the disc plate 13 is not shown in FIG. 8).

The spring accommodation windows 22 respectively have the coil springs 14 accommodated therein with the positive side end portions 22a of the spring accommodation windows 22 respectively supporting the positive side end portions 14a of the coil springs 14, and with the negative side end portions 22b of the spring accommodation windows 22 respectively supporting the negative side end portions 14b of the coil springs 14.

Each of the coil springs 14 is accommodated in each of the spring accommodation windows 22 in the compressed state.

The term "rotational direction" used for explanation of the present embodiment is intended to mean the rotational direction of the disc plates 12, 13, in other words, to indicate the circumferential direction of the disc plates 12, 13 and the hub plate 11.

In addition, the term "positive side" and the term "negative side" are intended to mean the rotational directions of the hub plate 11 with respect to the rotational directions of the disc plates 12, 13, respectively. This means that the opposite rotational direction of the hub plate 11 with respect to the disc plates 12, 13 is intended to indicate the "positive side" while the same rotational direction of the hub plate 11 as the rotational direction of the disc plates 12, 13 is intended to indicate "negative side".

Here, the disc plates 12, 13 are assumed to be rotated in the R1 direction in FIG. 1, so that the positive side and the negative side of the rotational direction can be indicated by the R2 direction and the R1 direction, respectively. Further, the axial direction indicates the same as the axial direction of the input shaft 19.

The spring accommodation windows 23 have the coil springs 15 accommodated therein with the positive side end portions 23a of the spring accommodation windows 23 respectively supporting the positive side end portions 15a of the coil springs 15, and with the negative side end portions 23b of the spring accommodation windows 23 respectively supporting the negative side end portions 15b of the coil springs 15.

This means that each of the coil springs 15 is accommodated in each of the spring accommodation windows 23 in the compressed state.

This means that the axial length of the coil spring 15 is longer than the circumferential length of the spring accommodation window 23 of the disc plates 12, 13. The coil spring 15 has an inner space accommodating a torsion spring 15A in a compressed state similarly to the coil spring 15.

As shown in FIGS. 1, 3, 5, the hub flange 18 is formed with a pair of spring accommodation windows 24 in opposing relationship with the spring accommodation windows 22 of the disc plates 12, 13 in such a manner that there are gaps predetermined in length between the positive side end portions 24a and the negative side end portions 24b of the spring accommodation windows 24 and the positive side end portions 14a and the negative side end portions 14b of the coil springs 14 facing the positive side end portions 24a and the negative side end portions 24b of the spring accommodation windows 24, respectively. The above spring accommodation windows 24 constitute a third accommodation portion as defined in the present invention.

Similarly, the hub flange 18 is formed with a pair of spring accommodation windows 25 in opposing relationship with the spring accommodation windows 23 of the disc plates 12, 13 in such a manner that there are gaps predetermined in length between the positive side end portions 25a and the negative side end portions 25b of the spring accommodation windows 25 and the positive side end portions 15a and the negative side end portions 15b of the coil springs 15 facing the positive side end portions 25a and the negative side end portions 25b of the spring accommodation windows 25, respectively. The above spring accommodation windows 25 constitute a fourth accommodation portion as defined in the present invention.

The positional relationship between the spring accommodation windows 24, 25 is set with the positive side end portions 14a, 15a of the coil springs 14, 15 and the positive side end portions 24a, 25a of the spring accommodation windows 24, 25 being spaced apart from each other at substantially the same distance when the hub plate 11 and the disc plates 12, 13 are positioned at a neutral position (see FIG. 1) where the hub plate 11 and the disc plates 12, 13 are not relatively rotated with each other, viz., not twisted with each other.

The positional relationship between the spring accommodation windows 24, 25 is set with the distance between the negative side end portion 15b of the coil spring 15 and the negative side end portion 25b of the spring accommodation window 25 being longer than the distance between the negative side end portion 14b of the coil spring 14 and the negative side end portion 24b of the spring accommodation window 24.

On the other hand, each of the arm portions 27 of the sub-plate 16 is shown in FIGS. 1, 4 to 7 to have a rotational one end portion formed with a bent portion 27A axially bent. Each of the bent portions 27A constitutes an engagement portion as defined in the present invention.

The bent portion 27A is held in opposing relationship with the positive side end portion 15a of the coil spring 15, and is engageable with and movable away from the positive side end portion 25a of the spring accommodation window 25.

The arm portions 27 respectively have opposing surfaces 27B each of which is held in opposing relationship with the negative side end portion 14b of the coil spring 14 to form a predetermined gap with the negative side end portion 14b of the coil spring 14. Each of the opposing surfaces 27B constitutes an opposing portion held in opposing relationship with the negative side end portion 14b of the coil spring 14 as defined in the present invention.

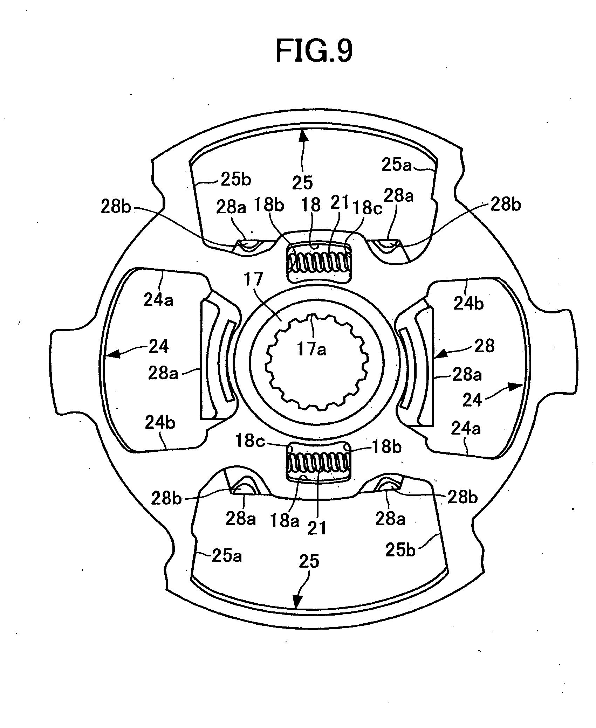

The sub-plate 16 is attached with a thrust plate 28 with the hub plate 11 being sandwiched between the sub-plate 16 and the thrust plate 28. The thrust plate 28 is formed with a plurality of projection portions 28a axially projecting to the sub-plate 16 through the spring accommodation windows 25 as shown in FIGS. 9 to 11.

Each of the projection portions 28a has a projecting end formed with an engagement projection 28b to be engaged with each of engagement holes 26e formed in the sub-plate 16. For this reason, the sub-plate 16 and the thrust plate 28 are integrally provided, so that the sub-plate 16 and the thrust plate 28 can be integrally rotated, and relatively rotated with respect to the hub plate 11.

When the sub-plate 16 is rotated in one of the rotational directions with respect to the hub plate 11, the bent portion 27A is brought into engagement with the positive side end portion 25a of the spring accommodation window 25 of the hub flange 18, thereby leading to regulating the sub-plate 16 from being rotated in the above one of the rotational directions with respect to the hub plate 11.

When, on the other hand, the sub-plate 16 is rotated in the other rotational direction with respect to the hub plate 11, the projection portion 28a of the thrust plate 28 is brought into engagement with the negative side end portions 25b of the spring accommodation windows 25 of the hub flange 18, thereby leading to regulating the sub-plate 16 from being rotated in the above other rotational direction with respect to the hub plate 11.

As will be understood from the foregoing description, the sub-plate 16 can be relatively rotated with respect to the hub plate 11 in a predetermined torsion angular range between a position where the bent portion 27A is engaged with the positive side end portion 25a of the spring accommodation window 25 and a position where the projection portion 28a of the thrust plate 28 is engaged with the negative side end portions 25b of the spring accommodation windows 25 of the hub flange 18.

When the bent portion 27A is engaged with the positive side end portion 25a of the spring accommodation window 25, and when the projection portion 28a of the thrust plate 28 is engaged with the negative side end portions 25b of the spring accommodation windows 25 of the hub flange 18, the hub plate 11 and the sub-plate 16 are integrally rotated with each other.

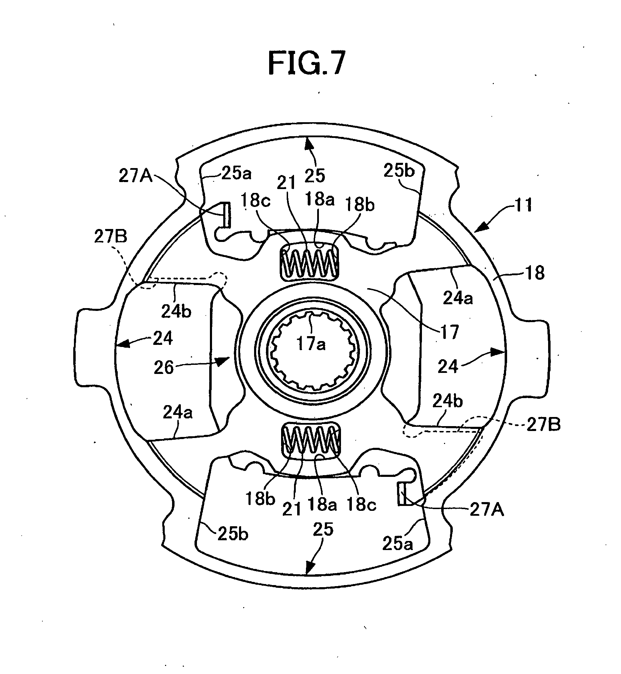

As the bent portion 27A is moved away, viz., spaced apart from the positive side end portion 25a, the bent portion 27A and the spring accommodation window 24 are constructed to have the compression amount of the small spring 21 reduced, and the sub-plate 16 is urged by the small spring 21 to have the bent portion 27A moved away from the positive side end portion 25a of the spring accommodation window 25 (see FIG. 7).

The small spring 21 is adapted to be resiliently deformed when the sub-plate 16 inclusive of the bent portion 27A is relatively rotated with respect to the hub plate 11 in the torsion angular range between a position where the bent portion 27A is spaced apart from the positive side end portion 25a of the spring accommodation window 25 and a position where the bent portion 27A is engaged with the positive side end portion 25a of the spring accommodation window 25.

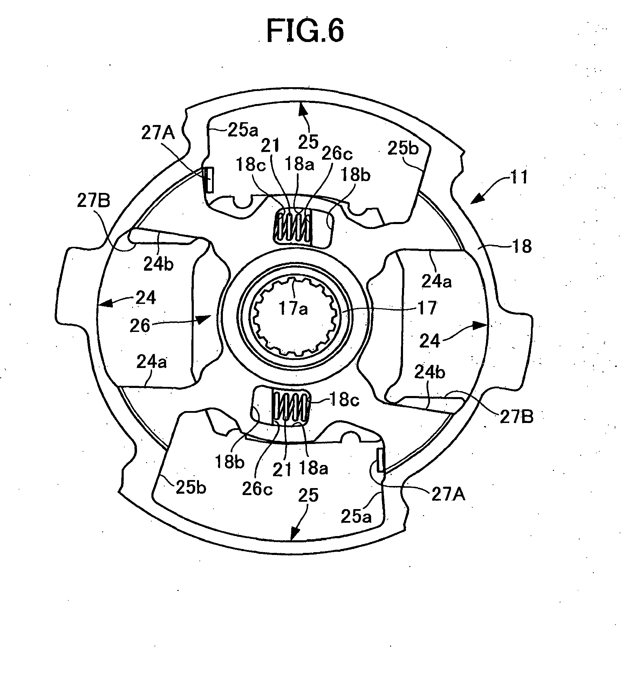

The small spring 21 forming part of the present embodiment is constructed to have a compression amount which is increased as the bent portion 27A is transferred to the state in which the bent portion 27A is engaged with the positive side end portion 25a of the spring accommodation window 25 from the state in which the bent portion 27A is spaced apart from the positive side end portion 25a of the spring accommodation window 25 (see FIG. 6), so that the torsion angle of the hub plate 11 and the sub-plate 16 comes to be at a minimum level in the state in which the bent portion 27A is engaged with the positive side end portion 25a of the spring accommodation window 25, while being increased as the bent portion 27A is moved away from the positive side end portion 25a of the spring accommodation window 25.

This means that the compression amount of the small spring 21 is reduced as the bent portion 27A is moved away from the positive side end portion 25a of the spring accommodation window 25, thereby leading to increasing the resiliently deformable amount of the small spring 21.

Further, the engagement of the bent portion 27A with the positive side end portion 25a of the spring accommodation window 25 demonstrates a stopper function, and thus makes it possible to prevent the small spring 21 from excessively being compressed, and to prevent the small spring 21 from being damaged.

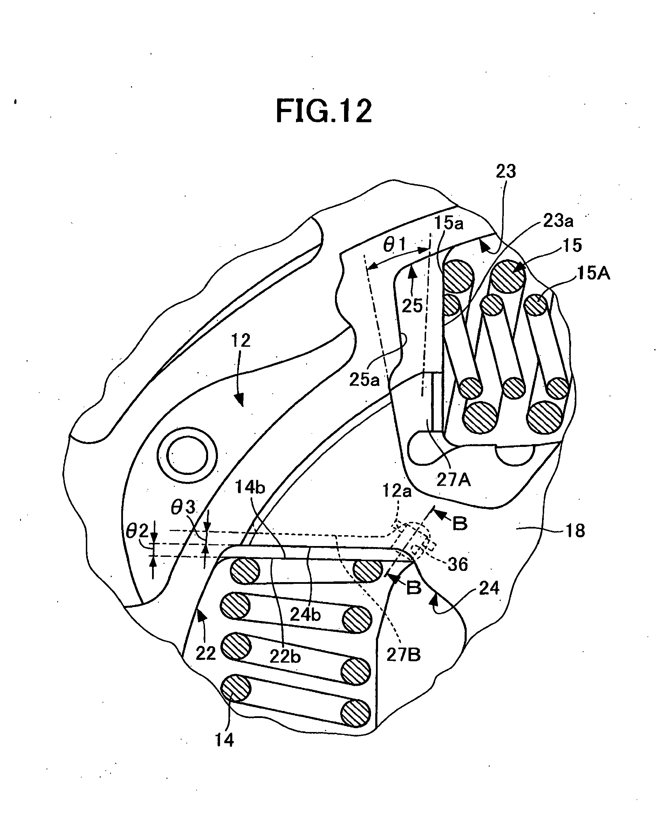

When the hub plate 11 and the disc plates 12, 13 are positioned at the neutral position as shown in FIG. 12, the bent portion 27A is designed to be engaged with the positive side end portion 15a of the coil spring 15.

At this time, between the bent portion 27A and the positive side end portion 25a of the spring accommodation window 25 of the hub flange 18 is formed a gap θ1 which allows the hub plate 11 and the sub-plate 16 to be relatively rotated with each other.

When, further, the hub plate 11 and the disc plates 12, 13 are positioned at the neutral position, between the negative side end portion 24b of the spring accommodation window 24 of the hub flange 18 and the negative side end portion 14b of the coil spring 14 is formed a gap θ2. The relationship between the gaps θ1 and θ2 is indicated by the equation θ1 > θ2.

When, further, the hub plate 11 and the disc plates 12, 13 are positioned at the neutral position, between the negative side end portion 24b of the spring accommodation window 24 of the hub flange 18 and the opposing surface 27B of the arm portion 27 is formed a gap θ3.

When the hub plate 11 is twisted in the negative side only in a predetermined torsion angular range from the neutral position with respect to the disc plates 12, 13, the negative side end portion 24b of the spring accommodation window 24 of the hub flange 18 is designed to be engaged with the negative side end portion 14b of the coil spring 14. At this time, between the negative side end portion 14b of the coil spring 14 and the opposing surface 27B of the arm portion 27 is formed a gap θ2+ θ3 which allows the hub plate 11 and the sub-plate 16 to be relatively rotated with each other.

Returning to FIGS. 1, 2, the disc plate 12 has an outer peripheral portion securely connected with the inner peripheral portion of an annular cushioning plate 29 in such a manner that the disc plate 12 and the cushioning plate 29 are secured to each other by rivets 20.

The cushioning plate 29 has axial both sides having annular friction materials 30a, 30b mounted thereon and secured thereto by rivets 31. The annular friction materials 30a, 30b are positioned between a flywheel secured to a crankshaft forming part of the internal combustion engine but not shown in the drawings and a pressure plate forming part of a clutch cover bolted to the flywheel.

The torsional vibration attenuation apparatus 10, the cushioning plate 29, and the friction materials 30a, 30b as previously mentioned in the present embodiment constitute as a whole the clutch apparatus 1.

The clutch apparatus 1 is constructed to have the rotational torque of the internal combustion engine inputted to the disc plates 12, 13 as a result of the friction materials 30a, 30b being pressed by the pressure plate to be brought into frictional contact with the pressure plate and the flywheel.

With a clutch pedal not shown being depressed, the pressure plate is operated to allow the friction materials 30a, 30b to be released from being pressed and to allow the friction materials 30a, 30b to be spaced apart from the flywheel, so that the rotational torque of the internal combustion engine is by no means inputted to the disc plates 12, 13.

When the hub plate 11 is twisted in the positive side (R2 direction in FIG. 1) and in the negative side (R1 direction in FIG. 1) with respect to the disc plates 12, 13, the coil springs 14, 15 are compressed, thereby making it possible to transmit the rotational torque between the hub plate 11 and the disc plates 12, 13.

The present embodiment is constructed to have the coil springs 14, 15 resiliently deformed in parallel when the hub plate 11 is twisted in the positive side with respect to the disc plates 12, 13 from the state in which the disc plates 12, 13 and the hub plate 11 are positioned at the neutral position.

When the hub plate 11 is twisted in the negative side with respect to the disc plates 12, 13 from the neutral position mentioned in the above, the coil spring 14 and the coil spring 15 are resiliently deformed in series in the order of the coil spring 14 and the coil spring 15.

Here, the twisting action of the hub plate 11 in the positive side with respect to the disc plates 12, 13 is performed at the acceleration time of the vehicle, while the twisting action of the hub plate 11 in the negative side with respect to the disc plates 12, 13 is performed at the deceleration time of the vehicle which is being operated under an engine brake.

As best shown in FIG. 2, the thrust plate 28 intervenes between the hub plate 11 and the disc plate 13 to be held in frictional contact with the disc plate 13 and a boss 17 forming part of the hub plate 11.

Between the disc plate 12 and the boss 17 of the hub plate 11 intervenes a thrust plate 32 which is held in frictional contact with the boss 17 of the hub plate 11 by the urging force of a disc spring 33 intervening between the thrust plate 32 and the disc plate 12.

Between the thrust plate 32 and the sub-plate 16 intervenes a thrust plate 34 which is held in frictional contact with the sub-plate 16 by a disc spring 35 intervening between the thrust plate 34 and the disc plate 12.

The disc spring 33 is adapted to urge the thrust plate 32 to the boss 17, while the disc spring 35 is adapted to urge the thrust plate 34 to the sub-plate 16, so that the thrust plate 28 can be urged to the disc plate 13 through the hub plate 11.

As a consequence, the disc plate 12 and the boss 17 are held in frictional contact with each other through the thrust plate 32 and the disc spring 33, while the disc plate 12 and the hub plate 11 are held in frictional contact with each other through the thrust plate 34 and the disc spring 35.

In addition, the disc plate 13 is held in frictional contact with the boss 17 through the thrust plate 28, thereby making it possible to generate hysteresis torques between the hub plate 11, the disc plates 12, 13, and the sub-plate 16.

Here, the friction coefficients of the thrust plate 28 and the thrust plate 32 are set to be smaller than the friction coefficient of the thrust plate 34. The spring constant of the disc spring 33 is set to be smaller than the spring constant of the disc spring 35.

For this reason, the hysteresis torque to be generated between the disc plate 12 and the sub-plate 16 comes to be larger than the hysteresis torque to be generated between the disc plates 12, 13 and the hub plate 11.

In the present embodiment, the thrust plate 34 and the disc spring 35 constitute in combination a first hysteresis mechanism as defined in the present invention, while the thrust plates 28, 32 and the plate springs 33, 35 constitute as a whole a second hysteresis mechanism as defined in the present invention.

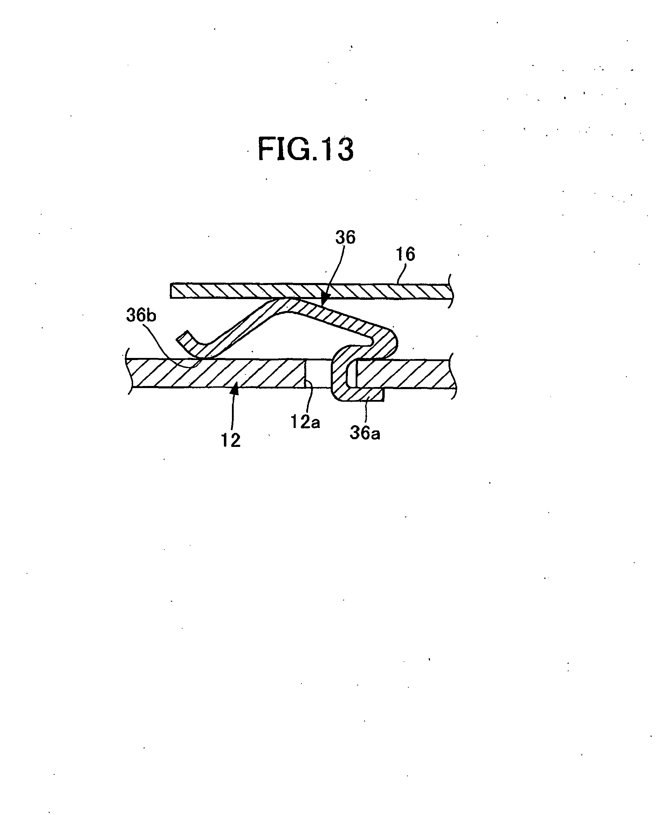

On the other hand, as shown in FIGS. 8, 12, the disc plate 12 is provided with a pair of return springs 36 which constitutes an urging member as defined in the present invention. The return springs 36 are best shown in FIGS. 12, 13 to have a base portion 36a received in a groove 12a formed in the disc plate 12 to sandwich and retain the disc plate 12, thereby engaging with the disc plate 12, and a forward end portion 36b held in engagement with the surface of the disc plate 12 facing the sub-plate 16. The return spring 36 has a V-shape cross-section between the base portion 36a and the forward end portion 36b.

When hub plate 11 is twisted in the negative side with respect to the disc plates 12, 13, the return spring 36 is constructed to be brought into engagement with the sub-plate 16 and deflected between the sub-plate 16 and the disc plate 12 as shown in FIG. 13, thereby urging the sub-plate 16 from the negative side to the positive side to increase the gap between the positive side end portion 25a of the spring accommodation window 25 and the bent portion 27A.

Next, the operation of the torsional vibration attenuation apparatus according to the present embodiment will be explained hereinafter. When the friction materials 30a, 30b are pressed by the pressure plate, and thus are brought into contact with the flywheel and the pressure plate, so that the rotational torque of the internal combustion engine is inputted to the disc plates 12, 13, thereby transmitting the rotational torque to the disc plates 12, 13 through the cushioning plate 29. In this way, the power of the internal combustion engine is transmitted to the drive transmission system.

Next, the actions of the hub plate 11 to be twisted in the positive side and in the negative side with respect to the disc plates 12, 13 will be explained hereinafter. Here, the rotational direction of the disc plates 12, 13 transmitted with the rotational torque from the internal combustion engine is assumed to be an R1 direction in FIG. 1.

When the rotational fluctuation of the internal combustion engine is increased at the acceleration time of the vehicle, the relative rotation of the disc plates 12, 13 and the hub plate 11 is increased, viz., the torsion angle of the disc plates 12, 13 and the hub plate 11 is increased. This means that the hub plate 11 is twisted in the positive side with respect to the disc plates 12, 13 to cause the coil springs 14, 15 to be compressed, and to cause rotational torque to be transmitted to the hub plate 11 from the disc plates 12, 13.

When the torsion angle of the disc plates 12, 13 and the hub plate 11 is increased, the hub plate 11 is relatively rotated in the R2 direction (positive side) with respect to the disc plates 12, 13 as the disc plates 12, 13 are rotated in the R1 direction.

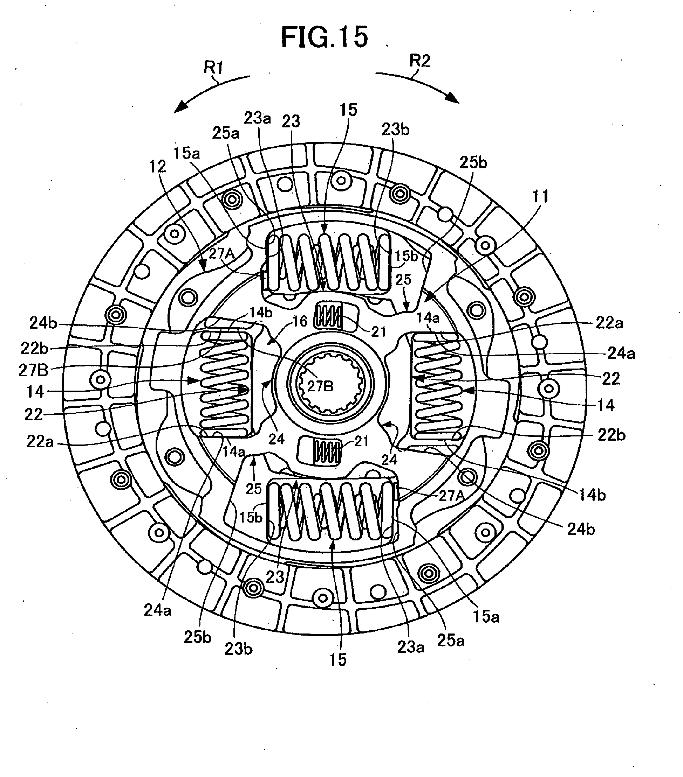

The actions of the disc plates 12, 13 and the hub plate 11 to be performed at this time will be explained with reference to FIG. 15. No disc plate 13 is shown in FIG. 15, but the disc plate 13 is movable in parallel with the disc plate 12, and thus is the same in action as the disc plate 12.

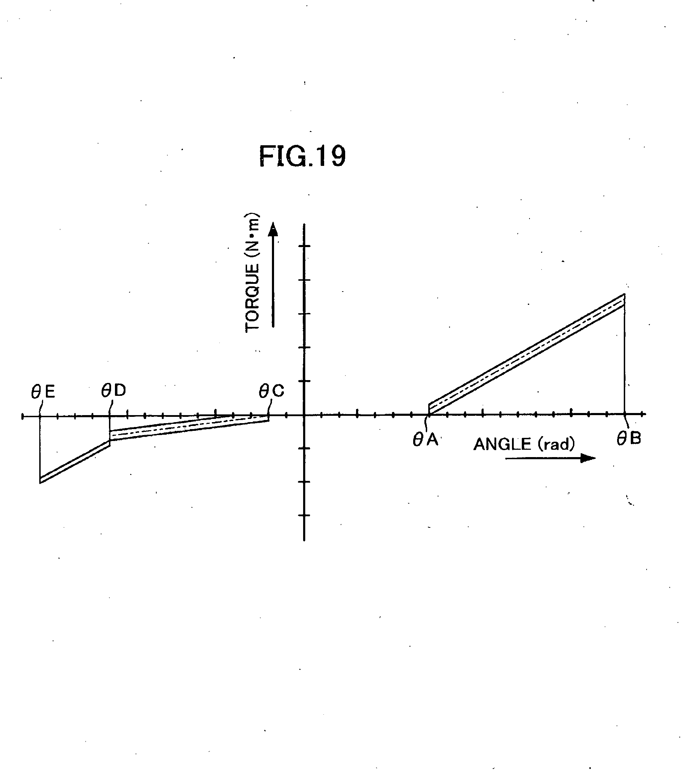

When the hub plate 11 is twisted in the R2 direction from the neutral state shown in FIG. 1, the sub-plate 16 is twisted in the R2 direction with respect to the hub plate 11 to have the small spring 21 compressed and deformed. When the hub plate 11 is twisted by the torsion angle θA shown in FIG. 19, the positive side end portion 25a of the spring accommodation window 25 of the hub flange 18 is brought into engagement with the bent portion 27A to have the small spring 21 stopped from being compressed and deformed. This means that the small spring 21 can be compressed and deformed in the torsion angular range between zero degree and θA shown in FIG. 19 in the positive side.

As has been explained in the above, the positional relationship between the spring accommodation windows 24, 25 is set with the positive side end portions 14a, 15a of the coil springs 14, 15 and the positive side end portions 24a, 25a of the spring accommodation windows 24, 25 being spaced apart from each other at substantially the same distance when the hub plate 11 and the disc plates 12, 13 are positioned at the neutral position, so that when the hub plate 11 is further twisted in the R2 direction from the torsion angle θA, the positive side end portions 24a, 25a of the spring accommodation windows 24, 25 are brought into engagement with the positive side end portions 14a, 15a of the coil springs 14, 15.

At this time, the coil springs 14, 15 are compressed and deformed between the negative side end portions 22b, 23b of the spring accommodation windows 22, 23 of the disc plates 12, 13 and the positive side end portions 24a, 25a of the spring accommodation windows 24, 25 of the hub plate 11.

When the hub plate 11 is further twisted in the R2 direction, the positive side end portion 25a of the spring accommodation window 25 of the hub flange 18 is engaged with the bent portion 27A, and thus the hub plate 11 and the sub-plate 16 are integrally twisted in the R2 direction to have the coil springs 14, 15 further compressed and deformed.

For this reason, the coil springs 14, 15 are compressed in parallel between the torsion angles θA and θB in FIG. 19, thereby giving rise to a second stage of torsional property having an increased torsional rigidity.

On the other hand, at the deceleration time of the vehicle, the rotational torque of the internal combustion engine is decreased, thereby generating an engine brake, so that the rotational torque is inputted to the hub plate 11 from the input shaft 19 of the transmission.

When the rotational fluctuation of the internal combustion engine is increased at the deceleration time of the vehicle, the torsion angle of the disc plates 12, 13 and the hub plate 11 is increased. This means that the hub plate 11 is twisted in the negative side with respect to the disc plates 12, 13 to cause the coil springs 14, 15 to be compressed, and to cause rotational torque to be transmitted from the hub plate 11 to the disc plates 12, 13.

When the torsion angle of the disc plates 12, 13 and the hub plate 11 is increased, the hub plate 11 is relatively rotated in the R1 direction (negative side) with respect to the disc plates 12, 13 from the neutral position as the hub plate 11 is rotated in the R1 direction.

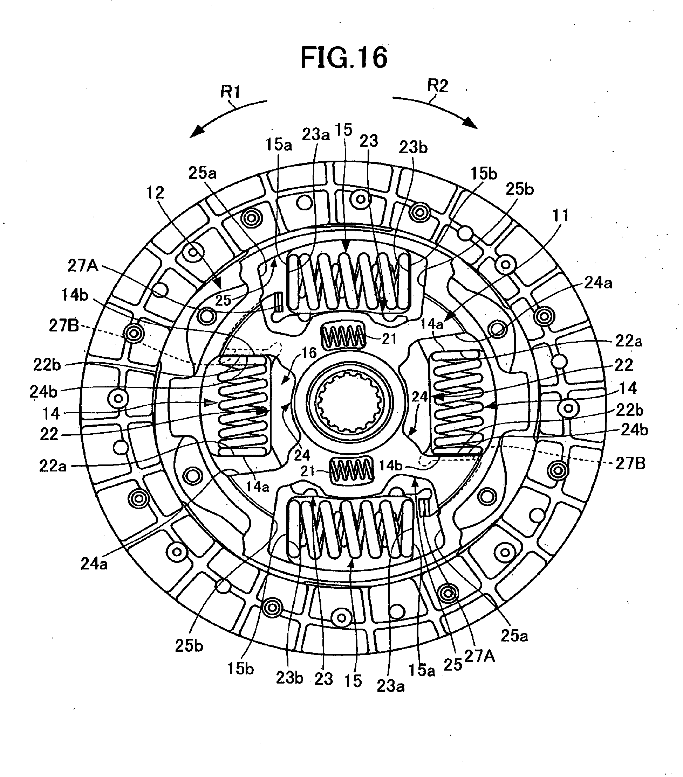

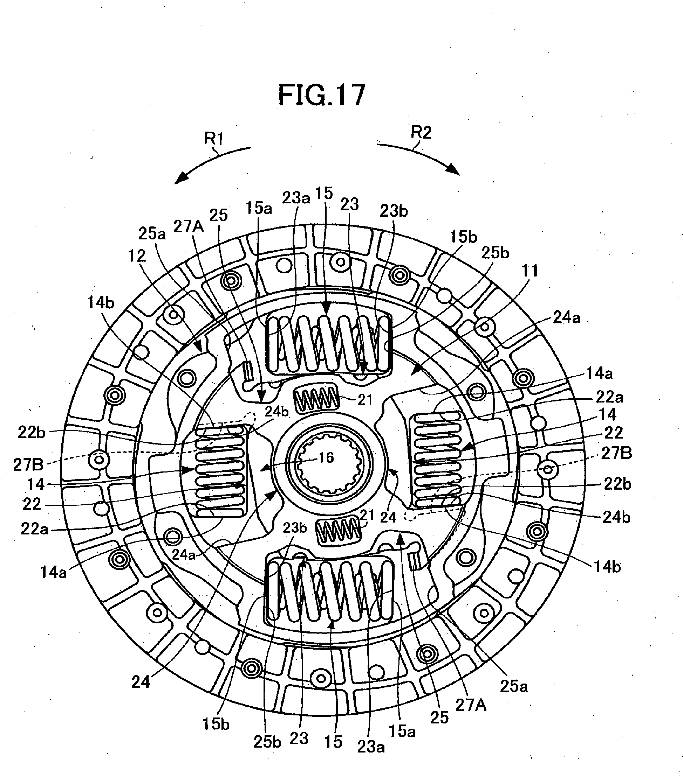

The actions of the disc plates 12, 13 and the hub plate 11 to be performed at this time will be explained with reference to FIGS. 16, 17. No disc plate 13 is shown in FIGS. 16, 17, but the disc plate 13 is movable in parallel with the disc plate 12, and thus is the same in action as the disc plate 12.

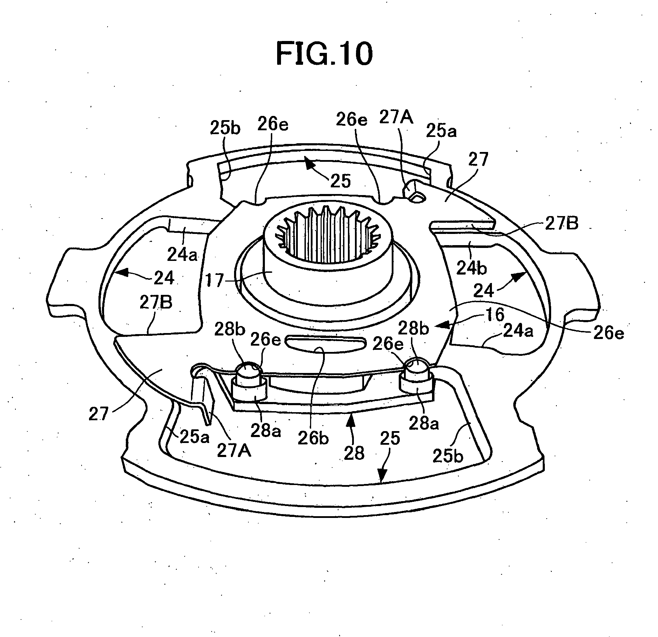

When the hub plate 11 is twisted in the R1 direction from the neutral state shown in FIG. 1, the projection portions 28a of the thrust plate 28 are respectively brought into engagement with the negative side end portions 25b of the spring accommodation windows 25 of the hub flange 18 (see FIG. 10) to have the hub plate 11 and the sub-plate 16 integrally twisted in the R1 direction with respect to the disc plates 12, 13.

When the hub plate 11 and the sub-plate 16 are twisted in the R1 direction by the gap θ2 between the negative side end portion 24b of the spring accommodation window 24 of the hub flange 18 and the negative side end portion 14b of the coil spring 14, viz., by the torsion angle θC in FIG. 19, the negative side end portion 24b of the spring accommodation window 24 of the hub flange 18 shown in FIG. 16 is brought into engagement with the negative side end portion 14b of the coil spring 14.

At this time, the gap 03 is formed between the negative side end portion 24b of the spring accommodation window 24 and the opposing surface 27B of the arm portion 27, so that the gap θ3 is formed between the opposing surface 27B of the arm portion 27 and the negative side end portion 14b of the coil spring 14.

For this reason, the hub plate 11 and the sub-plate 16 are relatively rotated by the gap 03, thereby having the small spring 21 compressed and deformed.

Here, the positional relationship of the spring accommodation windows 24, 25 is set with the distance between the negative side end portion 15b of the coil spring 15 and the negative side end portion 25b of the spring accommodation window 25 being longer than the distance between the negative side end portion 14b of the coil spring 14 and the negative side end portion 24b of the spring accommodation window 24.

For this reason, when the hub plate 11 is further twisted in the R1 direction, the coil spring 14 is compressed and deformed between the positive side end portions 22a of the spring accommodation windows 22 of the disc plates 12, 13 and the negative side end portion 24b of the spring accommodation window 24 of the hub plate 11 in the state in which the hub plate 11 and the sub-plate 16 has the gap θ3 maintained as shown in FIG. 17.

For this reason, only the coil spring 14 is compressed in the torsion angular range between θC and θD, thereby generating an area of small torsional rigidity as compared with the positive side torsional property.

When the disc plates 12, 13 are inputted with extremely small torsional vibrations originated from the rotational fluctuation caused by the torque fluctuation of the internal combustion engine, the hub plate 11 and the sub-plate 16 are relatively rotated by the gap θ3, thereby compressing and deforming the small spring 21 to attenuate the extremely small torsional vibrations.

Here, the thrust plate 34 and the disc spring 35 for generating the hysteresis torque are provided between the disc plate 12 and the sub-plate 16, and the thrust plates 28, 32 and the disc springs 33, 35 are provided between the disc plates 12, 13 and the boss 17 of the hub plate 11, so that the hysteresis torque to be generated between the disc plates 12, 13 and the hub plate 11 can be reduced to a level smaller than the hysteresis torque to be generated between the disc plate 12 and the sub-plate 16.

For this reason, the hysteresis torque to be generated between the hub plate 11 and the disc plates 12, 13 can be reduced when the hub plate 11 and the sub-plate 16 are relatively rotated with each other.

In the present embodiment, the hysteresis torque to be generated between the hub plate 11 and the disc plates 12, 13 is set at a hysteresis torque which can allow the small spring 21 to resiliently be deformed, thereby making it possible for the small spring 21 to reliably attenuate the extremely small torsional vibrations.

When the hub plate 11 is further twisted in the Redirection, as shown in FIG. 17, the negative side end portion 25b of the spring accommodation window 25 of the hub flange 18 is brought into engagement with the negative side end portion 15b of the coil spring 15 to have the coil spring 15 compressed and deformed between the positive side end portions 23a of the spring accommodation windows 23 of the disc plates 12, 13 and the negative side end portion 25b of the spring accommodation window 25 of the hub plate 11.

For this reason, the coil springs 14, 15 are compressed in parallel between the torsion angles between θD and θE in FIG. 19, thereby increasing the torsional rigidity.

This means that the negative torsional property becomes a second stage of torsional property having the coil springs 14, 15 resiliently deformed in series in the order of the coil spring 14 and the coil spring 15, thereby making it possible to obtain a torsional property having a rigidity lower than the positive side second stage of torsional property.

For this reason, the torsional rigidity at the acceleration time of the vehicle can be made larger than the torsional rigidity at the deceleration time of the vehicle to have the torsional rigidity around the torsional resonance point increased, thereby making it possible to suppress the torsional resonance of the drive transmission system in the low rotation area from being generated.

Further, the torsional rigidity at the deceleration time of the vehicle can be made smaller than the torsional rigidity at the acceleration time of the vehicle, and can be made smaller especially in the high rotation area with the large rotational fluctuation of the internal combustion engine than the torsional rigidity at the acceleration time of the vehicle, thereby making it possible to increase the attenuation force and thus to attenuate the torsional vibrations.

Further, the relatively large torsional vibrations can be attenuated by the coil springs 14, 15 during the acceleration and deceleration of the vehicle, thereby making it possible to suppress the chinking noises from being generated from the collisions of the slipping gear pairs of the transmission gear sets caused by the relatively large torsional vibrations originated from the rotational fluctuation in response to the torque fluctuation of the internal combustion engine.

Further, the coil springs 14, 15 are compressed in parallel during the acceleration of the vehicle, thereby making it possible for the torsional rigidity at the acceleration time of the vehicle to be increased to a level larger than the torsional rigidity at the deceleration time of the vehicle. This makes it possible to suppress the muffled sounds in the passenger room from being generated by the vibrations caused by the torsional resonance of the drive transmission system originated from the torque fluctuation of the internal combustion engine.

Further, the fact that the present embodiment can obtain the second stage of torsional property with the high rigidity to resiliently deform the coil springs 14, 15 in parallel during the acceleration time and deceleration time of the vehicle makes it possible to suppress the low frequency vibrations, i.e., what is called the tip-in/tip-out.

The "tip-in/tip-out" indicative of low frequency vibrations means what is called a "jerking phenomenon" which causes a vehicle body to quickly be moved back and forth by the torsional vibrations of the drive transmission system when the acceleration pedal is quickly depressed or released, viz., "ON" or "OFF" in its low opening degree state. According to the present embodiment, the previous jerking phenomenon can be suppressed.

Further, in the first stage of torsional property in the torsional angular range of θC to θA, the coil springs 14, 15 are not resiliently deformed, but the hub plate 11 and the sub-plate 16 are relatively rotated to resiliently deform the small spring 21, thereby making it possible to reduce the torsional rigidity to a small level.

For this reason, the present embodiment can suppress the abnormal noises constituted by what is called clattering noises caused by the collisions of the gear pairs with no load. Those noises are generally caused by the extremely small torsional vibrations originated from the rotational fluctuation caused by the torque fluctuation of the internal combustion engine at the idling time of the internal combustion engine immediately after the shift position is changed to the neutral.

On the other hand, the following description will hereinafter be directed to the operation of the torsional vibration attenuation apparatus 10 to be performed when the vehicle is stopped with the shift position being changed to the neutral position during the deceleration travel of the vehicle.

When the shift position is changed to the neutral position in the state in which the hub plate 11 is twisted in the R1 direction (negative side) with respect to the disc plates 12, 13 during the deceleration travel of the vehicle, the hub plate 11 is urged by the coil springs 14, 15 to be twisted in the R2 direction (positive side).

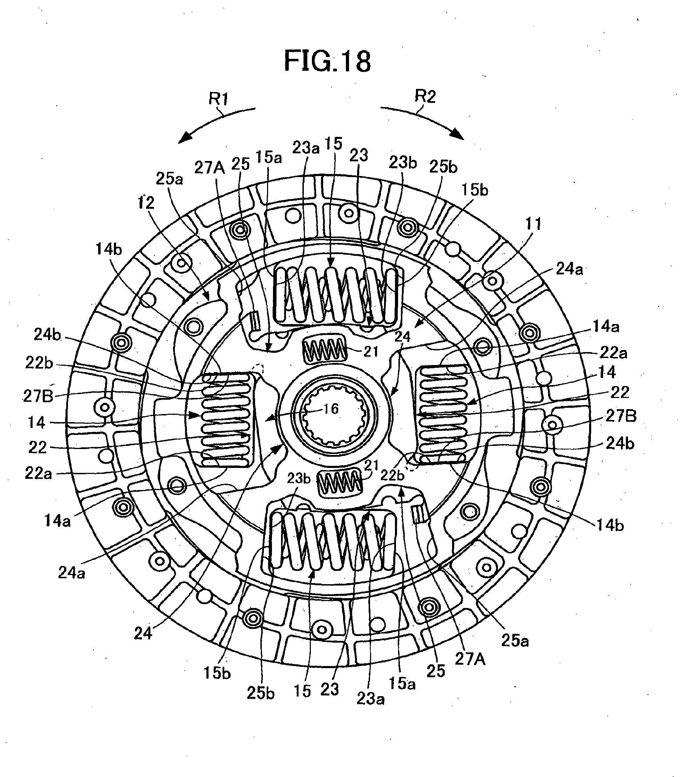

At this time, the negative side end portion 24b of the spring accommodation window 24 of the hub flange 18 is pressed by the negative side end portion 14b of the coil spring 14, so that the opposing surface 27B of the arm portion 27 of the sub-plate 16 and the negative side end portion 24b of the spring accommodation window 24 are positioned to be flush with each other, so that the negative side end portion 14b of the coil spring 14 is brought into engagement with the opposing surface 27B of the arm portion 27 of the sub-plate 16 and the negative side end portion 24b of the spring accommodation window 24 of the hub flange 18 as shown in FIG. 18.

For this reason, there is a possibility that the sub-plate 16 is sometimes not twisted in the positive side with respect to the hub plate 11 to have the opposing surface 27B positioned in the positive side from the negative side end portion 24b of the spring accommodation window 24.

In particular, the thrust plate 34 having a friction coefficient larger than the coefficients of the thrust plates 28, 32 intervenes between the sub-plate 16 and the disc plate 12, thereby generating a relatively large hysteresis torque between the sub-plate 16 and the disc plate 12.

For this reason, it is difficult to generate the torsional torque tantamount to overcoming the hysteresis torque by the thrust plate 34, so that the opposing surface 27B is difficult to be twisted in the positive side from the negative side end portion 24b of the spring accommodation window 24.

For this reason, there is a possibility that the hub plate 11 and the disc plates 12, 13 are returned to the respective neutral positions in the state that the bent portion 27A formed on the arm portion 27 of the sub-plate 16 is not sufficiently spaced apart in the positive side from the positive side end portion 25a of the spring accommodation window 25 of the hub flange 18.

Here, the action of the bent portion 27A formed on the arm portion 27 of the sub-plate 16 to be sufficiently spaced apart in the positive side from the positive side end portion 25a of the spring accommodation window 25 of the hub flange 18 is performed when the vehicle is transferred to the acceleration state in which the hub plate 11 is twisted in the R2 direction with respect to the disc plates 12, 13 to have the bent portion 27A brought into engagement with the positive side end portion 25a of the spring accommodation window 25 of the hub plate 11.

If the bent portion 27A is not sufficiently spaced apart in the positive side from the positive side end portion 25a of the spring accommodation window 25, the torsion angle between the hub plate 11 and the sub-plate 16 is not increased, thereby resulting in the compression amount of the small spring 21 being not decreased. For this reason, the small spring 21 cannot be sufficiently resiliently deformed at the idling time of the vehicle, thereby making it impossible to sufficiently suppress the previously mentioned clattering noises.

The present embodiment is constructed to have a return spring 36 provided on the disc plate 12. When hub plate 11 is twisted in the negative side with respect to the disc plates 12, 13, the return spring 36 is brought into engagement with the sub-plate 16 and deflected between the sub-plate 16 and the disc plate 12, thereby urging the sub-plate 16 in the direction to increase the gap between the positive side end portion 25a of the spring accommodation window 25 and the bent portion 27A.

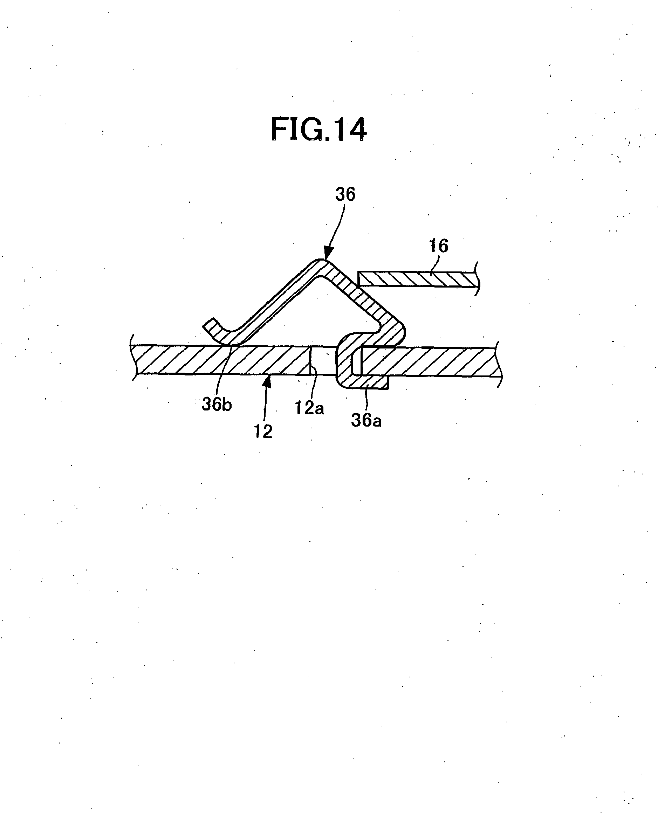

The return spring 36 is therefore resiliently deformed to be returned to its original state to have the sub-plate 16 twisted to the positive side from the negative side with respect to the hub plate 11 as shown in FIG. 14 when the hub plate 11 is returned to the neutral position from the negative side with respect to the disc plates 12, 13.

For this reason, the bent portion 27A is sufficiently spaced apart in the positive side from the positive side end portion 25a of the spring accommodation window 25, thereby making it possible to form the gap θ3 between the negative side end portion 24b of the spring accommodation window 24 of the hub flange 18 and the opposing surface 27B of the arm portion 27.

As a consequence, when the vehicle is stopped with the shift position being changed to the neutral position during the deceleration travel of the vehicle, the torsion angle between the hub plate 11 and the sub-plate 16 is increased to make it possible for the small spring 21 to be sufficiently resiliently deformed, thereby making it possible to sufficiently suppress the clattering noises at the idling time of the vehicle and to prevent the attenuation property from being lowered.

Further, in the present embodiment, the sub-plate 16 has a flange portion 26 connected with the hub plate 11 through the small spring 21, and a pair of arm portions 27 radially outwardly projecting from the flange portion 26. Each of the arm portions 27 has a bent portion 27A held in opposing relationship with the positive side end portion 15a of the coil spring 15 to be engaged with or disengaged from, i.e., spaced apart from the positive side end portion 25a of the spring accommodation window 25 of the hub flange 18, and an opposing surface 27B held in opposing relationship with the negative side end portion 14b of the coil spring 14 to form a predetermined gap between the opposing surface 27B and the negative side end portion 14b of the coil spring 14.

For this reason, the gap θ3 can be formed between the negative side end portion 14b of the coil spring 14 and the opposing surface 27B of the arm portion 27 when the hub plate 11 is twisted in the negative side with respect to the disc plates 12, 13 to have the negative side end portion 24b of the spring accommodation window 24 brought into engagement with the negative side end portion 14b of the coil spring 14.

It will therefore be understood that when the disc plates 12, 13 are inputted with the extremely small torsional vibrations originated from the rotational fluctuation caused by the torque fluctuation of the internal combustion engine, the opposing surface 27B can be engaged with the negative side end portion 14b of the coil spring 14 or be spaced apart across the gap θ3 from the negative side end portion 14b of the coil spring 14, thereby making it possible to twist the hub plate 11 and the sub-plate 16, and to attenuate the extremely small torsional vibrations with the action of the small spring 21.

Further, the return spring 36 forming part of the present embodiment is constructed to urge the sub-plate 16 from the negative side to the positive side to have the torsion angle between the hub plate 11 and the sub-plate 16 increased when the sub-plate 16 is urged by the return spring 36 from the negative side to the positive side in the direction in which the bent portion 27A is spaced apart from the positive side end portion 25a of the spring accommodation window 25 to have the sub-plate 16 inclusive of the bent portion 27A twisted in the direction in which the bent portion 27A is spaced apart from the positive side end portion 25a of the spring accommodation window 25.

For this reason, the sub-plate 16 inclusive of the bent portion 27A is twisted in the direction in which the bent portion 27A is spaced apart from the positive side end portion 25a of the spring accommodation window 25 when the hub plate 11 and the disc plates 12, 13 are returned to the respective neutral positions, so that the torsion angle between the hub plate 11 and the sup-plate 16 can be increased in the state in which the coil springs 14, 15 are not resiliently deformed.

For this reason, the small spring 21 can be sufficiently resiliently deformed, so that the extremely small torsional vibrations originated from the rotational fluctuation caused by the torque fluctuation of the internal combustion engine at the idling time of the vehicle can be attenuated by the small spring 21, thereby making it possible to suppress the clattering noises from being generated.

Further, the small spring 21 is constructed to have the compression deformation amount increased as the state of the bent portion 27A is transferred from the state in which the bent portion 27A is spaced apart from the positive side end portion 25a of the spring accommodation window 25 to the state in which the bent portion 27A is held in engagement with the positive side end portion 25a of the spring accommodation window 25.

For this reason, the compression amount of the small spring 21 can be reduced as the bent portion 27A is spaced apart from the positive side end portion 25a of the spring accommodation window 25. This means that the more increased the gap between the bent portion 27A and the positive side end portion 25a of the spring accommodation window 25, the more increased the resilient deformation is imparted to the small spring 21.

Further, in the present embodiment, the urging member is constituted by the return spring 36, so that the urging member can be simplified in construction, thereby making it possible to suppress the production cost of the torsional vibration attenuation apparatus 10 from being increased.

Although the present embodiment has been explained raising an example in which the return spring 36 is provided as one of the urging members to be resiliently deformed between the disc plate 12 and the sub-plate 16 to urge the sub-plate 16 in the direction in which the gap between the positive side end portion 25a of the spring accommodation window 25 and the bent portion 27A is increased, the present invention is not limited to this example.

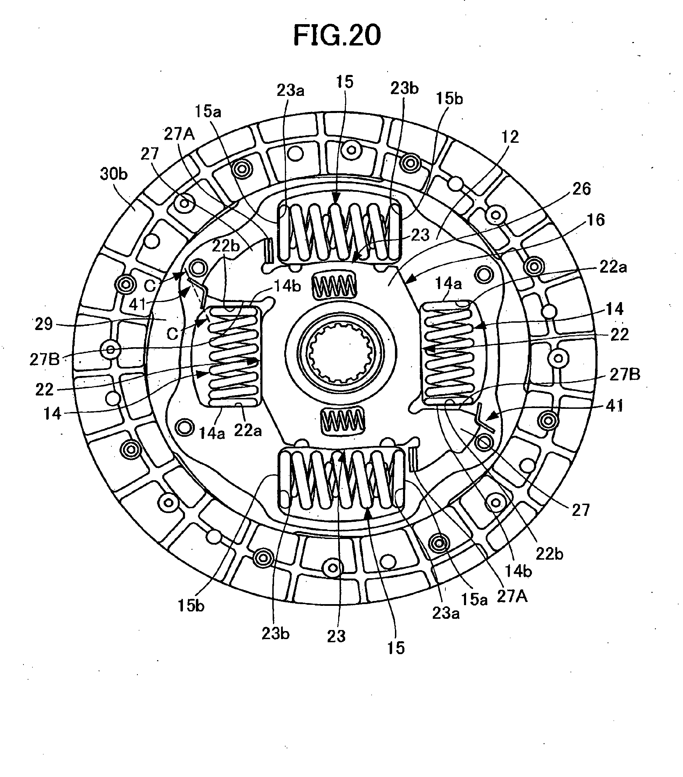

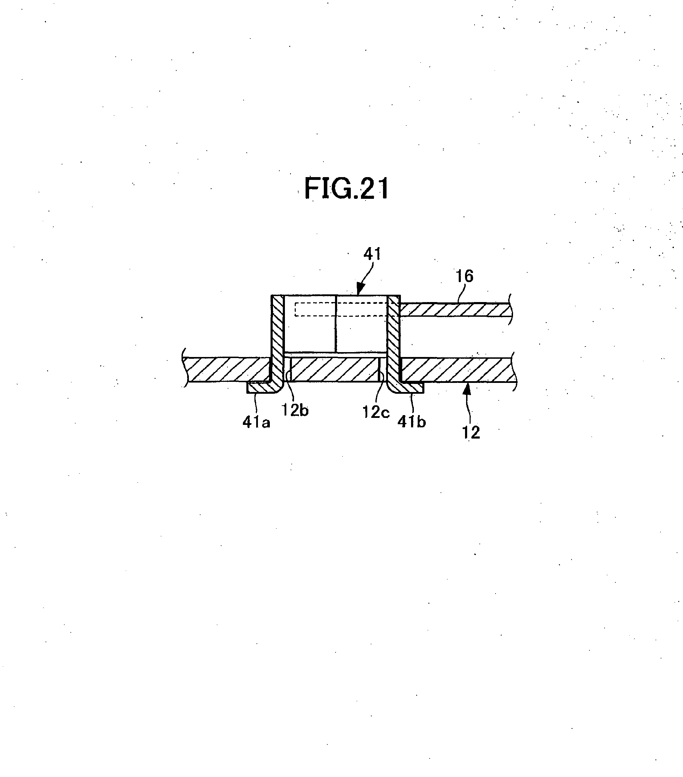

According to the present invention, the torsional vibration attenuation apparatus may be modified for example to have a return spring 41 secured to the disc plate 12 as shown in FIGS. 20, 21, the return spring 41 being to be brought into engagement with the radially outer end of the arm portion 27 of the sub-plate 16 to be deflected when the hub plate 11 is twisted in the negative side, thereby urging the sub-plate 16 in the direction in which the gap between the positive side end portion 25a of the spring accommodation window 25 and the bent portion 27A is increased.

The return spring 41 has both end portions respectively having engagement portions 41a, 41b engaged with grooves 12b, 12c formed in the disc plate 12. When the hub plate 11 is twisted in the negative side, the return spring 41 is brought into engagement with the radially outer end of the arm portion 27 of the sub-plate 16 to be deflected at the engagement portions 41a. 41b functioning as fulcrums, respectively.

The previously mentioned present embodiment has been explained raising as an example the torsional vibration attenuation apparatus 10 applied to the clutch apparatus 1, however, the present invention is not limited to the torsional vibration attenuation apparatus 10 but may be applied to any type of the torsional vibration attenuation apparatus. For example for a hybrid vehicle to which the torsional vibration attenuation apparatus is applied, the torsional vibration attenuation apparatus according to the present invention may be applied to a torsional vibration attenuation apparatus constituting a hybrid damper or the like intervening between the output shaft of the internal combustion engine and a power splinting mechanism for splitting the power to an electric motor and a wheel side output shaft.

Further, the torsional vibration attenuation apparatus according to the present invention may be applied to a torsional vibration attenuation apparatus constituting a hybrid damper or the like intervening between a lock-up clutch apparatus forming part of a torque convertor and a transmission gear set. Alternatively, the torsional vibration attenuation apparatus according to the present invention may be applied to a torsional vibration attenuation apparatus intervening between a differential case and a ring gear provided on the outer peripheral portion of the differential case.

From the foregoing description, it will be understood that the torsional vibration attenuation apparatus according to the present invention has such an advantageous effect that the torsion angle between the intermediate rotation member and the driven rotation member can be increased to sufficiently resiliently deform the third resilient member and thereby to prevent the attenuation property from being lowered when the drive rotation member is returned to the neutral position from the state in which the drive rotation member is twisted in the negative side with respect to the driven rotation member. The torsional vibration attenuation apparatus according to the present invention is useful as a torsional vibration attenuation apparatus which is to be mounted on the vehicle and can differentiate the positive torsional property obtained when the driven rotation member is twisted in the positive side with respect to the drive rotation member from the negative rotational property obtained when the driven rotation member is twisted in the negative side with respect to the drive rotation member.

### {EXPLANATION OF REFERENCE NUMERALS}

10: torsional vibration attenuation apparatus
11: hub plate
12, 13: disc plate
14: coil spring
15: coil spring
14a, 15a: positive side end portion of coil spring
14b, 15b: negative side end portion of coil spring
16: sub-plate
19: input shaft
21: small spring
22: spring accommodation window
23: spring accommodation window
22a, 23a, 24a, 25a: positive side end portion
22b, 23b, 24b, 25b: negative side end portion
24: spring accommodation window
25: spring accommodation window
26: flange portion
27: arm portion
27A: bent portion
27B: opposing surface
28, 32, 34: thrust plate
33, 35: disc spring
36, 41: return spring

## Claims

1. A torsional vibration attenuation apparatus (10), comprising:
a drive rotation member (12, 13),
a driven rotation member (11) provided in coaxial relationship with the drive rotation member (12, 13) and relatively rotatable with respect to the drive rotation member, and
a first resilient member (14) and a second resilient member (15) respectively having the drive rotation member and the driven rotation member relatively rotatably connected with each other,
the first resilient member (14) and the second resilient member (15) being deformable in parallel when the driven rotation member is twisted in a positive side (R2) opposite to the rotational direction of the drive rotation member with respect to the drive rotation member (12, 13), the first resilient member (14) and the second resilient member (15) being deformable in series in an order of the first resilient member (14) and the second resilient member (15) when the driven rotation member (11) is twisted in a negative side (R1) the same in direction to the rotational direction of the drive rotation member (12, 13) with respect to the drive rotation member (12, 13),
an intermediate rotation member (16) relatively rotatably provided on the driven rotation member (11) in a predetermined torsion angular range,
a third resilient member (21) having a spring constant lower than the spring constant of each of the first resilient member and the second resilient member to have the intermediate rotation member and the driven rotation member relatively rotatably connected with each other, and
an urging member (36) provided on the drive rotation member (12, 13),
the intermediate rotation member (16) being constructed to be relatively rotatable with respect to the driven rotation member (11) in the states in which the first resilient member (14) and the second resilient member (15) are not resiliently deformed and in which the driven rotation member is twisted in the negative side (R1),
the torsional vibration attenuation apparatus **characterized in that**
the urging member (36) being adapted to urge the intermediate rotation member (16) from the negative side (R1) to the positive side (R2) to have the torsion angle between the intermediate rotation member and the driven rotation member increased in the state in which the driven rotation member is twisted in the negative side.

2. The torsional vibration attenuation apparatus (10) as set forth in claim 1, in which
the drive rotation member (12, 13) has a first accommodation portion (22) for supporting the both end portions of the first resilient member (14) and a second accommodation portion (23) for supporting the both end portions of the second resilient member (15),
the driven rotation member (11) has a third accommodation portion (24) and a fourth accommodation portion (25), the third accommodation portion (24) accommodating the first resilient member (14) in opposing relationship with the first accommodation portion (22) and having predetermined gaps with the both end portions of the first resilient member (14) in the rotational direction, and the fourth accommodation portion (25) accommodating the second resilient member (15) in opposing relationship with the second accommodation portion (23) and having predetermined gaps with the both end portions of the second resilient member (15) in the rotational direction,
the distance between the positive side end portions of the first resilient member (14) and the second resilient member (15) and the positive side end portions of the third accommodation portion (24) and the fourth accommodation portion (25) facing the positive side end portions of the first resilient member (14) and the second resilient member (15) when the driven rotation member (11) takes a neutral position where the driven rotation member (11) is not twisted in the positive (R2) and negative (R1) sides with respect to the drive rotation member (12, 13) are substantially equal to each other,
the distance between the negative side end portion of the second resilient member (15) and the negative side end portion of the fourth accommodation portion (25) facing the negative side end portion of the second resilient member (15) being longer than the distance between the negative side end portion of the first resilient member (14) and the negative side end portion of the third accommodation portion (24) facing the negative side end portion of the first resilient member (14), and
the intermediate rotation member (16) having a flange portion (26) connected with the driven rotation member (11) through the third resilient member (21), and an arm portion (27) radially outwardly projecting from the flange portion (26), the arm portion (27) having an engagement portion (27A) facing the positive side end portion of the second resilient member (15) to be engaged with and spaced apart from the positive side end portion of the fourth accommodation portion (25), and an opposing portion facing the negative side end portion of the first resilient member (14) to form a predetermined gap with the negative side end portion of the first resilient member (14).

3. The torsional vibration attenuation apparatus (10) as set forth in claim 2, in which
the urging member (36) is adapted to urge the intermediate rotation member (16) from the negative side (R1) to the positive side (R2) in the direction in which the engagement portion (27A) is moved away from the positive side end portion of the fourth accommodation portion (25), the torsion angle between the intermediate rotation member (16) and the driven rotation member (11) being increased when the intermediate rotation member (16) is twisted in the direction in which the engagement portion (27A) is spaced apart from the positive side end portion of the fourth accommodation portion (25).

4. The torsional vibration attenuation apparatus (10) as set forth in claim 2 or 3, in which
the third resilient member (21) has a compression deformation amount increased as the engagement portion (27A) is moved from the state in which the engagement portion (27A) is spaced apart from the positive side end portion of the fourth accommodation portion (25) to the state in which the engagement portion (27A) is engaged with the positive side end portion of the fourth accommodation portion (25).

5. The torsional vibration attenuation apparatus (10) as set forth in any one of claims 1 to 4, which further comprises
a first hysteresis mechanism disposed between the drive rotation member (12, 13) and the intermediate rotation member (16) to generate a hysteresis torque between the drive rotation member (12, 13) and the intermediate rotation member (16), and
a second hysteresis mechanism disposed between the drive rotation member (12, 13) and the driven rotation member (11) to generate a hysteresis torque between the drive rotation member (12, 13) and the driven rotation member (11),
the hysteresis torque to be generated by the second hysteresis mechanism being smaller than the hysteresis torque to be generated by the first hysteresis mechanism,
the hysteresis torque being generated between the drive rotation member (12, 13) and the driven rotation member (11) by the second hysteresis mechanism when the driven rotation member (11) is relatively rotated with respect to the intermediate rotation member (16).

6. The torsional vibration attenuation apparatus (10) as set forth in any one of claims 1 to 5, in which
the urging member (36) is constituted by a return spring secured to the drive rotation member (12, 13),
the return spring being deformable to urge the intermediate rotation member (16) from the negative side to the positive side when the driven rotation member (11) is twisted in the negative side.

7. The torsional vibration attenuation apparatus (10) as set forth in any one of claims 1 to 6, which is mounted on a vehicle to have the drive rotation member (12, 13) transmitted with a rotation torque from an internal combustion engine and to have the driven rotation member (11) output the rotation torque to a drive transmission system,
the driven rotation member (11) being twisted in the positive side at the acceleration time of the vehicle, and the driven rotation member (11) being twisted in negative side at the deceleration time of the vehicle.

## Patentansprüche

1. Torsionsvibrationsabschwächungsvorrichtung (10), mit:
einem antreibenden Rotationsbauteil (12, 13),
einem angetriebenen Rotationsbauteil (11), das in koaxialer Beziehung zu dem antreibenden Rotationsbauteil (12, 13) ist und in Bezug auf das antreibende Rotationsbauteil relativ drehbar ist, und
einem ersten federnden Bauteil (14) und einem zweiten federnden Bauteil (15), die jeweils das antreibende Rotationsbauteil und das angetriebene Rotationsbauteil relativ drehbar miteinander verbunden haben,
wobei das erste federnde Bauteil (14) und das zweite federnde Bauteil (15) parallel verformbar sind, wenn das angetriebene Rotationsbauteil in einer entgegengesetzt zu der Rotationsrichtung des antreibenden Rotationsbauteils positiven Richtung (R2) in Bezug auf das antreibende Rotationsbauteil (12, 13) verdreht wird, wobei das erste federnde Bauteil (14) und das zweite federnde Bauteil (15) in Reihe in einer Reihenfolge des ersten federnden Bauteils (14) und des zweiten federnden Bauteils (15) verformbar sind, wenn das angetriebene Rotationsbauteil (11) in einer negativen Richtung (R1), die gleiche in Richtung der Rotationsrichtung des antreibenden Rotationsbauteils (12, 13), in Bezug auf das antreibende Rotationsbauteil (12, 13) verdreht wird,
einem Zwischenrotationsbauteil (16), das relativ drehbar an dem angetriebenen Rotationsbauteil (11) in einem vorbestimmten Torsionswinkelbereich vorgesehen ist,
einem dritten federnden Bauteil (21), das eine geringere Federkonstante hat als die Federkonstante von sowohl dem ersten federnden Bauteil als auch dem zweiten federnden Bauteil, um das Zwischenrotationsbauteil und das angetriebene Rotationsbauteil relativ drehbar miteinander zu verbinden, und
einem Vorspannbauteil (36), das an dem antreibenden Rotationsbauteil (12, 13) vorgesehen ist,
wobei das Zwischenrotationsbauteil (16) so gestaltet ist, dass es relativ drehbar in Bezug auf das angetriebene Rotationsbauteil (11) in den Zuständen ist, in denen das erste federnde Bauteil (14) und das zweite federnde Bauteil (15) nicht federnd verformt sind und in denen das angetriebene Rotationsbauteil in der negativen Richtung (R1) verdreht ist,
wobei die Torsionsvibrationsabschwächungseinrichtung **dadurch gekennzeichnet ist, dass**
das Vorspannbauteil (36) angepasst ist, um das Zwischenrotationsbauteil (16) von der negativen Richtung (R1) zu der positiven Richtung (R2) vorzuspannen, um den Torsionswinkel zwischen dem Zwischenrotationsbauteil und dem angetriebenen Rotationsbauteil in dem Zustand vergrößert zu haben, in dem das angetriebene Rotationsbauteil in negativer Richtung verdreht wird.

2. Torsionsvibrationsabschwächungsvorrichtung (10) wie in Anspruch 1 dargelegt, in der
das antreibende Rotationsbauteil (12, 13) einen ersten Aufnahmeabschnitt (22) für das Halten der beiden Endabschnitte des ersten federnden Bauteils (14) und einen zweiten Aufnahmeabschnitt (23) für das Halten der beiden Endabschnitte des zweiten federnden Bauteils (15) hat,
wobei das angetriebene Rotationsbauteil (11) einen dritten Aufnahmeabschnitt (24) und einen vierten Aufnahmeabschnitt (25) hat, wobei der dritte Aufnahmeabschnitt (24) das erste federnde Bauteil (14) in gegenüberliegender Beziehung mit dem ersten Aufnahmeabschnitt (22) aufnimmt und vorbestimmte Spalte mit den beiden Endabschnitten des ersten federnden Bauteils (14) in Rotationsrichtung hat, und der vierte Aufnahmeabschnitt (25) das zweite federnde Bauteil (15) in gegenüberliegender Beziehung mit dem zweiten Aufnahmeabschnitt (23) aufnimmt und vorbestimmte Spalte mit den beiden Endabschnitten des zweiten federnden Bauteils (15) in Rotationsrichtung hat,
wobei die Abstände zwischen den Endabschnitten in positiver Richtung des ersten federnden Bauteils (14) und des zweiten federnden Bauteils (15) und den Endabschnitten in positiver Richtung des dritten Aufnahmeabschnitts (24) und des vierten Aufnahmeabschnitts (25), die den Endabschnitten in positiver Richtung des ersten federnden Bauteils (14) und des zweiten federnden Bauteils (15) gegenüberliegen, wenn das angetriebene Rotationsbauteil (11) eine neutrale Position einnimmt, in der das angetriebene Rotationsbauteil (11) in der positiven (R2) und negativen Richtung (R1) in Bezug auf das antreibende Rotationsbauteil (12, 13) nicht verdreht wird, im Wesentlichen gleich zueinander sind,
wobei der Abstand zwischen dem Endabschnitt in negativer Richtung des zweiten federnden Bauteils (15) und dem Endabschnitt in negativer Richtung des vierten Aufnahmeabschnitts (25), der dem Endabschnitt in negativer Richtung des zweiten federnden Bauteils (15) gegenüberliegt, länger ist als der Abstand zwischen dem Endabschnitt in negativer Richtung des ersten federnden Bauteils (14) und dem Endabschnitt in negativer Richtung des dritten Aufnahmeabschnitts (24), der dem Endabschnitt in negativer Richtung des ersten federnden Bauteils (14) gegenüberliegt, und
das Zwischenrotationsbauteil (16) einen Flanschabschnitt (26), der mit dem angetriebenen Rotationsbauteil (11) durch das dritte federnde Bauteil (21) verbunden ist, und einen Armabschnitt (27), der radial nach außen von dem Flanschabschnitt (26) hervorsteht, wobei der Armabschnitt (27) einen Eingriffsabschnitt (27A) hat, der dem Endabschnitt in positiver Richtung des zweiten federnden Bauteils (15) gegenüberliegt, um in Eingriff mit und beabstandet von dem Endabschnitt in positiver Richtung des vierten Aufnahmeabschnitts (25) zu sein, und einen gegenüberliegenden Abschnitt hat, der dem Endabschnitt in negativer Richtung des ersten federnden Bauteils (14) gegenüberliegt, um eine vorbestimmte Spalte mit dem Endabschnitt in negativer Richtung des ersten federnden Bauteils (14) auszubilden.

3. Torsionsvibrationsabschwächungsvorrichtung (10) wie in Anspruch 2 dargelegt, in der
das Vorspannbauteil (36) angepasst ist, um das Zwischenrotationsbauteil (16) von der negativen Richtung (R1) zu der positiven Richtung (R2) in der Richtung vorzuspannen, in der der Eingriffsabschnitt (27A) von dem Endabschnitt in positiver Richtung des vierten Aufnahmeabschnitts (25) wegbewegt wird, wobei der Torsionswinkel zwischen dem Zwischenrotationsbauteil (16) und dem angetriebenen Rotationsbauteil (11) vergrößert wird, wenn das Zwischenrotationsbauteil (16) in der Richtung verdreht wird, in der der Eingriffsabschnitt (27A) von dem Endabschnitt in positiver Richtung des vierten Aufnahmeabschnitts (25) beabstandet wird.

4. Torsionsvibrationsabschwächungsvorrichtung (10) wie in Anspruch 2 oder 3 dargelegt, in der
das dritte federnde Bauteil (21) einen Kompressionsverformungsbetrag hat, der ansteigt, wenn sich der Eingriffsabschnitt (27A) von dem Zustand, in dem der Eingriffsabschnitt (27A) von dem Endabschnitt in positiver Richtung des vierten Aufnahmeabschnitts (25) beabstandet ist, zu dem Zustand bewegt, in dem der Eingriffsabschnitt (27A) in Eingriff mit dem Endabschnitt in positiver Richtung des vierten Aufnahmeabschnitts (25) ist.

5. Torsionsvibrationsabschwächungsvorrichtung (10) wie in einen der Ansprüche 1 bis 4 dargelegt, die ferner aufweist
einen ersten Hysteresemechanismus, der zwischen dem antreibenden Rotationsbauteil (12, 13) und dem Zwischenrotationsbauteil (16) angeordnet ist, um ein Hysteresedrehmoment zwischen dem antreibenden Rotationsbauteil (12, 13) und dem Zwischenrotationsbauteil (16) zu generieren, und
einen zweiten Hysteresemechanismus, der zwischen dem antreibenden Rotationsbauteil (12, 13) und dem angetriebenen Rotationsbauteil (11) angeordnet ist, um ein Hysteresedrehmoment zwischen dem antreibenden Rotationsbauteil (12, 13) und dem angetriebenen Rotationsbauteil (11) zu generieren,
wobei das durch den zweiten Hysteresemechanismus zu generierende Hysteresedrehmoment kleiner als das durch den ersten Hysteresemechanismus zu generierende Hysteresedrehmoment ist,
wobei das Hysteresedrehmoment, das zwischen dem antreibenden Rotationsbauteil (12, 13) und dem angetriebenen Rotationsbauteil (11) durch den zweiten Hysteresemechanismus generiert wird, wenn das angetriebene Rotationsbauteil (11) relativ in Bezug auf das Zwischenrotationsbauteil (16) gedreht wird.

6. Torsionsvibrationsabschwächungsvorrichtung (10) wie in einen der Ansprüche 1 bis 5 dargelegt, in der
das Vorspannbauteil (36) durch eine Rückholfeder gebildet ist, die an dem antreibenden Rotationsbauteil (12, 13) gesichert ist,
wobei die Rückholfeder verformbar ist, um das Zwischenrotationsbauteil (16) von der negativen Richtung zu der positiven Richtung vorzuspannen, wenn das angetriebene Rotationsbauteil (11) in der negativen Richtung verdreht wird.

7. Torsionsvibrationsabschwächungsvorrichtung (10) wie in einen der Ansprüche 1 bis 6 dargelegt, die
an einem Fahrzeug montiert ist, um ein Rotationsdrehmoment von einer Brennkraftmaschine mit dem antreibenden Rotationsbauteil (12, 13) übertragen zu haben und um das Rotationsdrehmoment mit dem angetriebenen Rotationsbauteils (11) an ein Antriebsübertragungssystem ausgegeben zu haben,
wobei das angetriebene Rotationsbauteil (11) zu der Beschleunigungszeit des Fahrzeugs in der positiven Richtung verdreht wird, und das angetriebene Rotationsbauteil (11) zu der Verzögerungszeit des Fahrzeugs in negativer Richtung verdreht wird.

## Revendications

1. Dispositif (10) d'atténuation de vibration de torsion, comprenant :
un élément rotatif menant (12, 13) ;
un élément rotatif mené (11) disposé en relation coaxiale avec l'élément rotatif menant (12, 13) et mobile en rotation de manière relative par rapport à l'élément rotatif menant ; et
un premier élément élastique (14) et un deuxième élément élastique (15) ayant respectivement l'élément rotatif menant et l'élément rotatif mené accouplé l'un à l'autre de façon mobile en rotation de manière relative,
le premier élément élastique (14) et le deuxième élément élastique (15) étant déformables en parallèle lorsque l'élément rotatif mené est sous torsion du côté positif (R2) opposé au sens de rotation de l'élément rotatif menant par rapport à l'élément rotatif menant (12, 13), le premier élément élastique (14) et le deuxième élément élastique (15) étant déformables en série dans l'ordre du premier élément élastique (14) et du deuxième élément élastique (15) lorsque l'élément rotatif mené (4) est sous torsion du côté négatif (R1), le même sens que le sens de rotation de l'élément rotatif menant (12, 13), par rapport à l'élément rotatif menant (12, 13) ;
un élément rotatif intermédiaire (16) disposé de façon mobile en rotation de manière relative sur l'élément rotatif mené (11) dans une plage angulaire de torsion prédéterminée ;
un troisième élément élastique (21) ayant une constante de ressort plus basse que la constante de ressort de chacun du premier élément élastique et du deuxième élément élastique pour faire que l'élément rotatif intermédiaire et l'élément rotatif mené soient accouplés de façon mobile en rotation de manière relative l'un à l'autre ; et
un élément poussant (36) disposé sur l'élément rotatif menant (12, 13),
l'élément rotatif intermédiaire (16) étant constitué pour être mobile en rotation de manière relative par rapport à l'élément rotatif mené (11) dans les états dans lesquels le premier élément élastique (14) et le deuxième élément élastique (15) ne sont pas déformés élastiquement et dans lesquels l'élément rotatif mené est sous torsion du côté négatif (R1),
le dispositif d'atténuation de vibration de torsion étant **caractérisé en ce que** l'élément poussant (36) est apte à pousser l'élément rotatif intermédiaire (16) du côté négatif (R1) vers le côté positif (R2) pour faire augmenter l'angle de torsion entre l'élément rotatif intermédiaire et l'élément rotatif mené dans l'état dans lequel l'élément rotatif mené est sous torsion du côté négatif.

2. Dispositif (10) d'atténuation de vibration de torsion selon la revendication 1,
dans lequel l'élément rotatif menant (12, 13) possède une première partie formant logement (22) destinée à supporter les deux parties d'extrémité du premier élément élastique (14) et une deuxième partie formant logement (23) destinée à supporter les deux parties d'extrémité du deuxième élément élastique (15),
dans lequel l'élément rotatif mené (11) possède une troisième partie formant logement (24) et une quatrième partie formant logement (25), la troisième partie formant logement (24) logeant le premier élément élastique (14) en relation d'opposition avec la première partie formant logement (22) et ayant des écartements prédéterminés avec les deux parties d'extrémité du premier élément élastique (14) dans la direction de rotation, et la quatrième partie formant logement (25) logeant le deuxième élément élastique (15) en relation d'opposition avec la deuxième partie formant logement (23) et ayant des écartements prédéterminés avec les deux parties d'extrémité du deuxième élément élastique (15) dans la direction de rotation,
dans lequel la distance entre les parties d'extrémité de côté positif du premier élément élastique (14) et du deuxième élément élastique (15) et les parties d'extrémité de côté positif de la troisième partie formant logement (24) et de la quatrième partie formant logement (25) faisant face aux parties d'extrémité positive du premier élément élastique (14) et du second élément élastique (15) lorsque l'élément rotatif mené (11) prend une position neutre où l'élément rotatif mené (11) n'est pas sous torsion des côtés positif (R2) et négatif (R1) par rapport à l'élément rotatif menant (12, 13) sont pratiquement égales l'une à l'autre,
la distance entre la partie d'extrémité de côté négatif du deuxième élément élastique (15) et la partie d'extrémité de côté négatif de la quatrième partie formant logement (25) faisant face à la partie d'extrémité de côté négatif du deuxième élément élastique (15) étant plus longue que la distance entre la partie d'extrémité de côté négatif du premier élément élastique (14) et la partie d'extrémité de côté négatif de la troisième partie formant logement (24) faisant face à la partie d'extrémité de côté négatif du premier élément élastique (14), et
l'élément rotatif intermédiaire (16) ayant une partie formant flasque (26) accouplée avec l'élément rotatif mené (11) par l'intermédiaire du troisième élément élastique (21), et une partie formant bras (27) en saillie radialement vers l'extérieur par rapport à la partie formant flasque (26), la partie formant bras (27) ayant une partie d'enclenchement (27A) faisant face à la partie d'extrémité de côté positif du deuxième élément élastique (15) pour être en prise avec et espacée de la partie d'extrémité de côté positif de la quatrième partie formant logement (25), et une partie opposée faisant face à la partie d'extrémité de côté négatif du premier élément élastique (14) pour former un écartement prédéterminé avec la partie d'extrémité de côté négatif du premier élément élastique (14).

3. Dispositif (10) d'atténuation de vibration de torsion selon la revendication 2, dans lequel l'élément poussant (36) est apte à pousser l'élément rotatif intermédiaire (16) du côté négatif (R1) vers le côté positif (R2) dans le sens dans lequel la partie d'enclenchement (27A) s'écarte de la partie d'extrémité de côté positif de la quatrième partie formant logement (25), l'angle de torsion entre l'élément rotatif intermédiaire (16) et l'élément rotatif mené (11) augmentant lorsque l'élément rotatif intermédiaire (16) est sous torsion dans le sens dans lequel la partie d'enclenchement (27A) est espacée de la partie d'extrémité de côté positif de la quatrième partie formant logement (25).

4. Dispositif (10) d'atténuation de vibration de torsion selon la revendication 2 ou 3, dans lequel le troisième élément élastique (21) a un montant de déformation en compression accru à mesure que la partie d'enclenchement (27A) se déplace depuis l'état dans lequel la partie d'enclenchement (27A) est espacée de la partie d'extrémité de côté positif de la quatrième partie formant logement (25) jusqu'à l'état dans lequel la partie d'enclenchement (27A) est en prise avec la partie d'extrémité de côté positif de la quatrième partie formant logement (25).

5. Dispositif (10) d'atténuation de vibration de torsion selon l'une quelconque des revendications 1 à 4, qui comprend en outre :
un premier mécanisme à hystérésis disposé entre l'élément rotatif menant (12, 13) et l'élément rotatif intermédiaire (16) pour engendrer un couple d'hystérésis entre l'élément rotatif menant (12, 13) et l'élément rotatif intermédiaire (11) ; et
un second mécanisme à hystérésis disposé entre l'élément rotatif menant (12, 13) et l'élément rotatif mené (11) pour engendrer un couple d'hystérésis entre l'élément rotatif menant (12, 13) et l'élément rotatif mené (13),
le couple d'hystérésis à engendrer par le second mécanisme à hystérésis étant plus petit que le couple d'hystérésis à engendrer par le premier mécanisme à hystérésis,
le couple d'hystérésis étant engendré entre l'élément rotatif menant (12, 13) et l'élément rotatif mené (11) par le second mécanisme à hystérésis lorsque l'élément rotatif mené (11) est entraîné en rotation de manière relative par rapport à l'élément rotatif intermédiaire (16).

6. Dispositif (10) d'atténuation de vibration de torsion selon l'une quelconque des revendications 1 à 5,
dans lequel l'élément poussant (36) est constitué par un ressort de rappel fixé à l'élément rotatif menant (12, 13),
le ressort de rappel étant déformable pour pousser l'élément rotatif intermédiaire (16) du côté négatif vers le côté positif lorsque l'élément rotatif mené (11) est sous torsion du côté négatif.

7. Dispositif (10) d'atténuation de vibration de torsion selon l'une quelconque des revendications 1 à 6, qui est monté sur un véhicule pour faire que l'élément rotatif menant (12, 13) transmette un couple de rotation provenant d'un moteur à combustion interne et pour faire que l'élément rotatif mené (11) sorte le couple de rotation vers un système de transmission de force motrice,
l'élément rotatif mené (11) étant sous torsion du côté positif au moment de l'accélération du véhicule, et l'élément rotatif mené (11) étant sous torsion du côté négatif au moment de la décélération du véhicule.
